# EUROPÄISCHE PATENTSCHRIFT

(11) **EP 4 530 394 B1**
(45) Veröffentlichungstag und Bekanntmachung des Hinweises auf die Patenterteilung: **27.08.2025**
(21) Anmeldenummer: 23200243.6
(22) Anmeldetag: 27.09.2023
(51) Int. Cl.: D21F 5/20, D21F 5/04, D21F 5/18

(54) **ENERGIEOPTIMIERTES TROCKNUNGSSYSTEM UND TROCKNUNGSVERFAHREN ZUR TROCKNUNG EINES TROCKNUNGSMEDIUMS**
ENERGY-OPTIMIZED DRYING SYSTEM AND DRYING METHOD FOR DRYING A DRYING MEDIUM
SYSTÈME DE SÉCHAGE À ÉNERGIE OPTIMISÉE ET PROCÉDÉ DE SÉCHAGE POUR SÉCHER UN MILIEU DE SÉCHAGE

(43) Veröffentlichungstag der Anmeldung: 02.04.2025
(73) Patentinhaber: TANN Europe GmbH, 44805 Bochum (DE)
(72) Erfinder: Huhn, Andreas, 40215 Düsseldorf (DE); Zander, Kevin Dennis, 44879 Bochum (DE); Melzow, Detlef, 16321 Bernau (DE); Preissler, Günther, 44897 Bochum (DE); Brückner, Lars, 45529 Hattingen (DE)
(74) Vertreter: Michalski Hüttermann & Partner Patentanwälte mbB

(56) Entgegenhaltungen:
- WO-A1-2015/107094
- DE-A1- 102011 084 116
- DE-A1- 2 630 853
- DE-C2- 3 307 358

## Beschreibung

Die vorliegende Erfindung betrifft ein Trocknungssystem zur Trocknung eines Trocknungsmediums.

Des Weiteren betrifft die vorliegende Erfindung ein Trocknungsverfahren zur Trocknung eines Trocknungsmediums unter Verwendung des vorgenannten Trocknungssystems.

### Hintergrund der Erfindung

Bislang bekannt ist, dass aus einem Faserstoff-Trocknungsprozess, beispielsweise Papier- oder Karton-Trocknungsprozess, stammende Abwärme im Allgemeinen zur Vorwärmung von Frischluft beziehungsweise Trocknungsluft verwendet wird. Als Trocknungsluft ist jene Luft zu verstehen, die für den Trocknungsprozess von Faserstoffen wie Papier oder Karton verwendet wird, um die darin enthaltene Feuchtigkeit aufzunehmen sowie abzuführen.

Dazu wird der Umgebung Umgebungsluft als Frischluft mit einer Außentemperatur entnommen und unmittelbar in einem Luft-Luft-Wärmetauscher vorgewärmt. Bei einem solchen Wärmetauscher handelt es sich derart um eine Abwärmenutzungsanlage, bei der Frischluft durch warme Abluft aus dem Trocknungsprozess vorgewärmt wird, um Trocknungsluft bereitzustellen. Als Frischluft wird Luft verstanden, die der Umgebung entnommen wird, beispielsweise dem Außenbereich einer Produktionshalle oder der Produktionshalle selbst. Als Abluft ist Luft zu verstehen, die durch den Trocknungsprozess Feuchtigkeit aufgenommen hat, mithin handelt es sich um mit Feuchtigkeit angereicherte Trocknungsluft.

Die warme und mit Feuchtigkeit angereicherte Abluft fließt im Luft-Luft-Wärmetauscher beispielhaft durch dünnwandige Glattrohre. Hierdurch wird die Abluft im Luft-Luft-Wärmetauscher gekühlt und kondensiert. Kalte Frischluft umströmt die dünnwandigen Rohre im Luft-Luft-Wärmetauscher und wird durch die Abluft vorgewärmt und anschließend aus dem Luft-Luft-Wärmetauscher ausströmend in den weiteren Trocknungsprozess durchgeleitet. Luft-Luft-Wärmetauscher gibt es beispielhaft in einer Kreuzstrom-Ausführung oder auch als Kreuz-Gegenstrom-Ausführung, insbesondere mit Umkehrkappen. Es kommen auch Plattenwärmetauscher, beispielsweise aus dünnwandigem Aluminium, Edelstahl, Glas oder sonstigen Materialien zur Anwendung. Dabei ist wesentlich, dass die Stoffströme von Abluft und Frischluft voneinander getrennt sind.

Es ist bekannt und umfänglich etabliert, dass die Luft-Luft-Wärmetauscher für regionale Wintertemperaturen ausgelegt werden. Dies bedeutet beispielhaft für Deutschland, dass Trocknungsysteme für einen Betrieb bei einer Hallenaußentemperatur von minus 15 Grad Celsius dimensioniert sind. Wenn im Sommer nun eine Hallenaußentemperatur von beispielsweise 35 Grad Celsius besteht, entspricht dies einem Temperaturgefälle von 50 Grad Celsius gegenüber der Dimensionierungsgrundlage. Dies führt im Sommer dazu, dass die Luft-Luft-Wärmerückgewinnung durch den hinsichtlich der Sommermonate überdimensionierten Luft-Luft-Wärmetauscher unwirtschaftlich ist, da das Trocknungssystem auf den Winterbetrieb ausgelegt ist. Hintergrund der Winterbetriebauslegung beziehungsweise des Wintermodus ist, dass die Frischluft auch in kalten Monaten im Luft-Luft-Wärmetauscher auf eine möglichst hohe Temperatur vorgewärmt werden soll, um einen reibungsfreien Betrieb des Trocknungssystems zu gewährleisten. Wegen der niedrigen Temperaturen im Winter ist in der Folge auch in Sommermonaten ein überdimensioniertes Trocknungssystem zwingend erforderlich.

Als vorbekannter Stand der Technik offenbart beispielsweise die DE 26 30 853 A1 eine Trocknungsvorrichtung, insbesondere zur Trocknung von Materialien wie Papier, Textilien oder Getreide. Bisherige Trocknungsvorrichtungen, wie beispielsweise die Trocknungspartien von Papiermaschinen, hatten das Problem, dass feuchte Abluft aus der Ausgangsleitung in die Atmosphäre abgegeben wurde, während der Eingangsleitung kontinuierlich Frischluft zugeführt wurde, die auf die zur Trocknung erforderliche Temperatur vorgeheizt wurde. Dies führte zu einem großen Wärmeverbrauch und Wärmeverlust. Die DE 26 30 853 A1 zielt darauf ab, eine Trocknungsvorrichtung zu schaffen, die gegenüber dem bisherigen Stand der Technik große Energieeinsparungen ermöglicht, indem die Wärme mit bestmöglicher Wirksamkeit von der durch die Ausgangsleitung ausströmenden feuchten Luft auf die durch die Eingangsleitung zuströmende trockene Luft übertragen wird. Dies wird durch den Einsatz einer Wärmepumpe erreicht, die in der Eingangsleitung einen Kondensator und in der Ausgangsleitung einen Verdampfer aufweist. Die Wärmepumpe senkt die Temperatur der Abluft so weit ab, dass die von ihr beim Trocknungsvorgang aufgenommene Feuchte mindestens zum Teil kondensiert. Andererseits wird die der durch die Ausgangsleitung strömenden Abluft entnommene Wärme auf einem höheren Niveau auf die der Trocknungsvorrichtung zuströmende Luft übertragen. Dadurch wird die Erwärmung der Luft auf die für die Trocknung erforderliche Temperatur mit niedrigerem Energieaufwand erreicht als bei einer direkten Beheizung, wie sie bisher üblich war. Durch die Kondensation der Feuchte in der Abluft wird zusätzlich Wasser eingespart und die Umweltbelastung durch aufsteigende Dampfschwaden vermindert. Die Eingangsleitung und die Ausgangsleitung können zu einem Kreislauf verbunden werden, wodurch weiter Wärme gespart und Belästigungen durch eventuell in der Abluft vorhandene Gerüche vermieden werden. Eine zusätzliche Kühlvorrichtung kann in der Ausgangsleitung nach dem Verdampfer der Wärmepumpe geschaltet werden, um die Wirtschaftlichkeit der Vorrichtung weiter zu verbessern. Diese Kühlvorrichtung kann den Verdampfer einer weiteren Wärmepumpe enthalten, wodurch die in der Abluft enthaltene Restwärme für andere Zwecke nutzbar gemacht wird. Ein vorgeschalteter Wärmeaustauscher zur direkten Übertragung von Wärme von der heißen Abluft auf die kühlere Trockenluft und eine konventionelle Heizvorrichtung in der Eingangsleitung können die Vorrichtung weiter optimieren. Es ist ein Bedürfnis, die Energieoptimierung noch weiter zu entwickeln.

### Beschreibung der Erfindung

Ausgehend von dieser Situation ist es eine Aufgabe der vorliegenden Erfindung, ein für den ganzjährigen Betrieb energieoptimiertes Trocknungssystem bereitzustellen.

Die Aufgabe der Erfindung wird durch die Merkmale der unabhängigen Hauptansprüche gelöst. Vorteilhafte Ausgestaltungen sind in den Unteransprüchen angegeben. Sofern technisch möglich, können die Lehren der Unteransprüche beliebig mit den Lehren der Haupt- und Unteransprüche kombiniert werden.

Insbesondere wird die Aufgabe demnach gelöst durch ein Trocknungssystem zur Trocknung eines Trocknungsmediums, insbesondere zur Trocknung von Faserstoffen, das Trocknungssystem aufweisend mindestens folgende Komponenten:
- einen Luft-Luft-Wärmetauscher, abkürzt LLW, mit einem LLW-Abluftvolumen und einem LLW-Frischluftvolumen, der Luft-Luft-Wärmetauscher aufweisend:
   - eine einspeisende LLW-Abluftströmungsanordnung zum Einströmen von Abluft mit einer Initialtemperatur in das LLW-Abluftvolumen und
   - eine ausspeisende LLW-Abluftströmungsanordnung mit einer Abluft-Folgetemperatur zum Ausströmen von Abluft aus dem LLW-Abluftvolumen,
   - eine einspeisende LLW-Frischluftströmungsanordnung zum Einströmen von Frischluft mit einer geregelten Frischlufteinströmtemperatur in das LLW-Frischluftvolumen und
   - eine ausspeisende LLW-Frischluftströmungsanordnung zum Ausströmen von Frischluft mit einer LLW-Austrittstemperatur aus dem LLW-Frischluftvolumen,
      wobei das LLW-Abluftvolumen und das LLW-Frischluftvolumen derart ausgebildet sind, dass Wärme von dem LLW-Abluftvolumen auf das LLW-Frischluftvolumen übertragbar ist, um die Frischluft zu erwärmen;
- eine Trocknungsanlage, die zur Trocknung des Trocknungsmediums ausgestaltet ist, wobei die Trocknungsanlage derart ausgebildet ist, dass die mindestens durch den Luft-Luft-Wärmetauscher aufgewärmte und zumindest mittelbar aus der LLW-Frischluftströmungsanordnung ausgeströmte Frischluft als Trocknungsluft mit dem Trocknungsmedium interagiert und verdampfte Feuchtigkeit aus dem Trocknungsmedium aufnimmt und als mit Feuchtigkeit beladene Abluft an eine Abluftleitungsanordnung ausgibt;
   wobei das Trocknungssystem ausgebildet ist, die Abluft aus der Trocknungsanlage über die Abluftleitungsanordnung und über die LLW-Abluftströmungsanordnung zumindest mittelbar zum Luft-Luft-Wärmetauscher zu führen, sodass eine zumindest mittelbare Übertragung der Wärme aus der Abluft in der Abluftleitungsanordnung auf die Frischluft in dem Luft-Luft-Wärmetauscher erfolgt;
      wobei der Luft-Luft-Wärmetauscher die Abluft aus der einspeisenden LLW-Abluftströmungsanordnung energetisch mindert;
   wobei das Trocknungssystem aufweist einen Vorwärm-Wärmetauscher mit einem Vorwärmvolumen und einem Vorwärmdurchflussvolumen, wobei der Vorwärm-Wärmetauscher ausgebildet ist zur Erwärmung von Frischluft, insbesondere Umgebungsluft, von einer Außentemperatur auf die geregelte Frischlufteinströmtemperatur;
   wobei das Trocknungssystem aufweist eine Zuluftleitungsanordnung zur Einspeisung der Frischluft mit der Außentemperatur,
wobei die einspeisende LLW-Frischluftströmungsanordnung den Vorwärm-Wärmetauscher zumindest mittelbar mit dem Luft-Luft-Wärmetauscher verbindet, um die Frischluft mit der geregelten Frischlufteinströmtemperatur, für den Luft-Luft-Wärmetauscher, insbesondere für das LLW-Frischluftvolumen des Luft-Luft-Wärmetauschers, bereitzustellen.

Nachfolgend werden vorteilige Aspekte der vorgeschlagenen Lösung erläutert und weiter nachfolgend bevorzugte modifizierte Ausführungsformen der vorgeschlagenen Lösung beschrieben. Erläuterungen, insbesondere zu Vorteilen und Definitionen von Merkmalen, sind dem Grunde nach beschreibende und bevorzugte, jedoch nicht limitierende Beispiele. Sofern eine Erläuterung limitierend ist, wird dies ausdrücklich erwähnt.

In anderen Worten ist insbesondere vorgesehen, dass durch den Vorwärm-Wärmetauscher eine technologische Lösung bereitgestellt wird, die es ermöglicht, im Trocknungssystem ganzjährige Sommerbedingungen zu fingieren. Durch den Vorwärm-Wärmetauscher kann mit der einspeisenden LLW-Frischluftströmungsanordnung eine Zuführung von konstant geregelter Frischlufteinströmtemperatur, beispielhaft 35 Grad Celsius, eingestellt werden. Dabei kann im Winter eine Aufwärmung auf diese geregelte Frischlufteinströmtemperatur erfolgen. Im Sommer kann der Vorwärm-Wärmetauscher ab einer Frischlufttemperatur entweder ausgeschaltet werden, um einen ganzjährig konstanten Betrieb einzustellen oder der Vorwärm-Wärmetauscher regelt die Frischlufteinströmtemperatur höher, um die Systemeffizienz weiter zu erhöhen.

Der jährliche Energiebedarf unterliegt den Schwankungen der Umgebungstemperatur. Diese Schwankungen gibt es auch im Tagesverlauf. So ist zum Beispiel im Tagesablauf die niedrigste Außentemperatur regelmäßig im Zeitraum zwischen etwa 4 bis 6 Uhr zu beobachten. Die beschriebene Erfindung vergleichmäßigt die Temperaturschwankungen der Frischluft, insbesondere der Umgebungsluft. Dies führt einerseits zu einer Vergleichmäßigung der Temperaturen von der einspeisenden LLW-Abluftströmungsanordnung auf die ausspeisende LLW-Abluftströmungsanordnung und andererseits von der einspeisenden LLW-Frischluftströmungsanordnung auf die ausspeisende LLW-Frischluftströmungsanordnung. Bei konventionellen Trocknungssystemen gibt es solch qualitative Vergleichmäßigungen nicht.

Gegenüber herkömmlichen Luft-Luft-Wärmetauschern kann die in die ausspeisende LLW-Frischluftströmungsanordnung strömende Frischluft ganzjährig höher erwärmt werden als es bei konventionellen Trocknungssystemen möglich ist. Gleichzeitig wird aus der einspeisenden LLW-Abluftströmungsanordnung eingeführte und in die ausspeisende LLW-Abluftströmungsanordnung durchgeleitete Abluft nicht so stark abgekühlt, wie es bei einem konventionellen Trocknungssystem bekannt ist. Dadurch bleibt das Temperaturniveau gegenüber einem konventionellen Trocknungssystem verhältnismäßig hoch und es können weitere Systemeinheiten mit einer verhältnismäßig hohen Kalorik versorgt werden.

Anders formuliert ergeben sich Vorteile unter anderem dahingehend, dass durch das vorliegende Trocknungssystem die Temperatur in der ausspeisenden LLW-Abluftströmungsanordnung stets auf einem höheren Temperaturniveau aus dem LLW-Abluftvolumen austritt als bei konventionellen Trocknungssystemen. Dies erfolgt bei gleichzeitig höherer Temperatur in der ausspeisenden LLW-Frischluftströmungsanordnung gegenüber konventionellen Trocknungssystemen. Hierdurch können nachfolgende Prozesse, beispielsweise nachfolgende Wärmetauscher, mit einem höheren Temperaturniveau versorgt werden.

Eine wesentliche Erkenntnis ist die Abkehr von dem etablierten Vorgehen, das heißeste Medium mit dem kältestem Medium zu kreuzen. Dies führte bislang zu großen Temperaturgefällen, welche nunmehr reduziert werden. Dadurch können nachfolgende Wärmeprozesse mit mehr Wärmeenergie bedient werden und die bestehende Wärmeenergie kann besser genutzt werden. Wichtig ist zu erwähnen, dass der erfindungsgemäße Effekt unabhängig von der expliziten Auswahl des Luft-Luft-Wärmetauschers auftritt.

Es ist grundsätzlich bekannt, dass eine Papier und Kartonmaschine über einen Luft-Luft-Wärmetauscher verfügt. Diesbezügliche Anfänge liegen mehr als 50 Jahre zurück. Seinerzeit gab es eine Vielzahl von Konstruktionen, beispielsweise unterschiedliche Wärmetauscher-Konstruktionen, etwa Rohr- oder Plattenwärmetauscher. Insbesondere feuchte Abluft war ein erhebliches Problem. Wenn feuchte Abluft mit kalter Zuluft in Berührung kommt, kondensiert die Feuchtigkeit aus. Die daraus resultierenden Korrosionen waren zur damaligen Zeit ein signifikantes Problem. Zusätzlich wurde die Formstabilität der Verbindung zwischen etwaigen Rohren und den Wänden beeinträchtigt. Es durfte zudem nicht zum Kurzschluss beziehungsweise Kontakt zwischen Abluft und Zuluft kommen, da die trockenere Zuluft mit feuchterer Abluft konterminiert würde. Diese Probleme lösend, hatte die Firma "Langbein & Engelbracht" einen Glasrohrwärmetauscher entwickelt. Der große Vorteil dieser Erfindung lag darin, dass mit Glas ein Werkstoff ausgewählt wurde, welcher formstabil gegen Säure, Laugen, Wasser, Öl usw. ist. Zusätzlich war die Korrosivität von Wasser kein großes Problem mehr. Über die Jahre haben sich diverse Luft-Luft-Wärmetauscher etabliert.

Die Integration eines Vorwärm-Wärmetauschers in ein Trocknungssystem lag bislang wegen dessen Produktionskosten und wegen dessen Platzbedarfs fern. Allerdings hat die vorliegende Entwicklung gezeigt, dass der durch den Vorwärm-Wärmetauscher erhöhte Wirkungsgrad einen deutlich effizienteren Betrieb des Trocknungssystems ermöglicht, sodass sich die Kosten für die Anschaffung und Betrieb des Vorwärm-Wärmetauschers amortisieren. Anders formuliert zeigt sich, dass der Wirkungsgrad bei der Gesamtanlage des Trocknungssystems im Jahresmittel gesteigert wird, gleichwohl im Sommer und im Winter.

Sämtliche Strömungs- oder Leitungsanordnungen sind nicht limitierend als Rohrleitungen zu verstehen, sondern können jegliche Stoffstromvolumina darstellen. Möglich sind jedoch auch Rohrleitungen und/oder Kanäle.

Sofern nachfolgend Wasser genannt ist, kann dieses Medium auch ein Medium als Austauschstoff oder ergänzender Stoff mit ähnlicher Funktion und Wirkung sein. Beispielsweise kann das Wasser für den Luft-Wasser-Wärmetauscher ein Wasser-Glykol-Gemisch sein. Möglich sind beispielsweise auch Medien mit anderen gefrierpunktsenkenden Eigenschaften, etwa Salz, Öl oder sonstige Medien. Dies wird teilweise durch die Formulierung "im Wesentlichen Wasser" impliziert.

Die Vorwärmung ist nicht auf einen Vorwärm-Wärmetauscher limitiert, es können auch zwei oder mehrere unterschiedliche Wärmetauschsysteme zum Einsatz kommen.

Nachfolgend werden Aspekte des Trocknungssystems weiter erörtert.

Das Trocknungssystem ist insbesondere ein Faserstofftrocknungssystem, besonders bevorzugt ein Papier- und/oder Kartontrocknungssystem.

Das Trocknungssystem weist auf einen Luft-Luft-Wärmetauscher, abgekürzt LLW, mit einem LLW-Abluftvolumen und einem LLW-Frischluftvolumen. Hierbei ist der Luft-Luft-Wärmetauscher beispielsweise und nicht limitierend ein Rohr- oder Plattenwärmetauscher.

Wie bereits erwähnt, sind Rohrwärmetauscher und Plattenwärmetauscher bestimmte Arten von Wärmetauschern, die dazu dienen, Wärmeenergie von einem Medium auf ein anderes zu übertragen. Sie unterscheiden sich jedoch in ihrer Konstruktion und Funktionsweise.

Ein beispielhafter und nicht limitierender Rohrwärmetauscher besteht aus einem Rohrsystem, in dem ein warmes Medium, beispielsweise Luft, im Innenrohr und ein kühles Medium, beispielsweise Luft, am Außenrohr fließen. Die Rohre beziehungsweise die Kalt-Warm-Konfiguration können grundsätzlich vertauscht werden. Auch ist es prinzipiell mit umfasst, dass anstelle der Luft ein anderes Medium, beispielsweise im Wesentlichen Wasser, umfasst ist.

Die Medien fließen insbesondere in entgegengesetzte Richtungen, wodurch das heiße Medium im Innenrohr das kühlere Medium im Außenrohr erwärmt.

Rohrwärmetauscher sind häufig in Heizsystemen eingebaut und erwärmen das Medium im Wärmespeicher. Rohrwärmetauscher sind relativ einfach zu reinigen und zu entkalken. Bei Abluftführung durch ein Innenrohr kann dieses durch ein Reinigungsprojektil, welches mit Druckluft und/oder einer Flüssigkeit, insbesondere Wasser, beaufschlagt wird, gereinigt werden. Die Zuluft um das Außenrohr wird regelmäßig gefiltert eingespeist, sodass an dieser Stelle Reinigungsprozesse nicht erforderlich sind.

Ein beispielhafter und nicht limitierender Plattenwärmetauscher besteht aus wellenförmig profilierten Platten, die so zusammengesetzt sind, dass jeweils in den aufeinanderfolgenden Zwischenräumen einmal das aufzuwärmende und danach das wärmeabgebende Medium fließt.

Plattenwärmetauscher sind sehr flexibel in Bezug auf die Gestaltung der Strömungsführung und können sehr kompakt gebaut werden und haben eine hohe Wärmestromdichte.

Bei Verschmutzung oder Verkalkung müssen Plattenwärmetauscher gereinigt werden. Geschraubte Plattenwärmetauscher können zur Reinigung in ihre Einzelteile zerlegt werden, während gelötete Plattenwärmetauscher ausgetauscht werden müssen.

Beide Arten von Wärmetauschern dienen dazu, Wärmeenergie von einem Medium auf ein anderes zu übertragen.

Rohrwärmetauscher, beispielsweise und nicht limitierend Glasrohrwärmetauscher, nutzen ein Rohrsystem für den Wärmeaustausch, während Plattenwärmetauscher wellenförmig profilierte Platten verwenden.

Plattenwärmetauscher können kompakter gebaut werden und haben eine höhere Wärmestromdichte als Rohrwärmetauscher. Allerdings haben große Plattenwärmetauscher den Nachteil eines mit zunehmender Strecke zunehmenden laminaren Wärmeübergangs, wohingegen bei Rohrwärmetauscher die Rohre das strömende Medium immer wieder brechen und eine turbulente Medienströmung ermöglichen, beziehungsweise begünstigen.

Die Reinigung eines Rohrwärmetauschers ist allerdings einfacher als die eines Plattenwärmetauschers, insbesondere wenn es sich um einen gelöteten Plattenwärmetauscher handelt. Mithin erfolgt die Auswahl des jeweiligen Wärmetauschers bedarfsgemäß.

Sofern vorliegend ein Wärmetauscher bezeichnet wird, sind neben Rohrwärmetauschern und Plattenwärmetauschern auch andere Wärmetauschersysteme nutzbar.

Der Luft-Luft-Wärmetauscher weist eine einspeisende LLW-Abluftströmungsanordnung zum Einströmen von Abluft mit einer Initialtemperatur in das LLW-Abluftvolumen auf.

Die Abluft ist beispielhaft und nicht limitierend Luft, die bereits Bestandteil eines Trocknungsprozesses war und insbesondere folglich eine höhere Feuchtigkeit aufweist als Frischluft, insbesondere Umgebungsluft. Die Initialtemperatur kann beispielsweise und nicht limitierend 85 Grad Celsius betragen.

Der Luft-Luft-Wärmetauscher weist ferner eine ausspeisende LLW-Abluftströmungsanordnung mit einer Abluft-Folgetemperatur zum Ausströmen von Abluft aus dem LLW-Abluftvolumen auf.

Der Luft-Luft-Wärmetauscher weist ferner eine einspeisende LLW-Frischluftströmungsanordnung zum Einströmen von Frischluft mit einer geregelten Frischlufteinströmtemperatur in das LLW-Frischluftvolumen auf.

Frischluft ist beispielhaft und nicht limitierend Luft, die noch kein gezielt systeminterner Bestandteil eines Trocknungsprozesses war. Bevorzugt gilt Umgebungsluft als Frischluft. Besonders bevorzugt weist die Frischluft eine geringere Feuchtigkeit auf als die Abluft.

Der Luft-Luft-Wärmetauscher weist ferner auf eine ausspeisende LLW-Frischluftströmungsanordnung zum Ausströmen von Frischluft mit einer LLW-Austrittstemperatur aus dem LLW-Frischluftvolumen.

Dabei sind das LLW-Abluftvolumen und das LLW-Frischluftvolumen derart ausgebildet, dass Wärme von dem LLW-Abluftvolumen auf das LLW-Frischluftvolumen übertragbar ist, um die Frischluft zu erwärmen. Die hierdurch erwärmte Frischluft wird beziehungsweise kann in einem späteren Prozessschritt zur Trocknung des Trocknungsmediums genutzt werden.

Die LLW-Austrittstemperatur kann beispielsweise und nicht limitierend 65 Grad Celsius betragen.

Das Trocknungssystem weist ferner auf eine Trocknungsanlage, die unter Nutzung der erwärmten Frischluft zur Trocknung des Trocknungsmediums ausgestaltet ist. Dabei ist die Trocknungsanlage derart ausgebildet, dass die mindestens durch den Luft-Luft-Wärmetauscher aufgewärmte und zumindest mittelbar aus der LLW-Frischluftströmungsanordnung ausgeströmte Frischluft als Trocknungsluft mit dem Trocknungsmedium interagiert. Bei dieser Interaktion wird Feuchtigkeit aus dem Trocknungsmedium aufgenommen und als mit Feuchtigkeit beladene Abluft an eine Abluftleitungsanordnung ausgegeben. Mit Vorzug entspricht die Temperatur in der Abluftleitungsanordnung mindestens der Initialtemperatur. Mit Vorzug wird die Abluft aus der Abluftleitungsanordnung unmittelbar in die LLW-Abluftströmungsanordnung weitergeleitet, sodass in beiden Anordnungen im Wesentlichen eine ähnliche Temperatur, nämlich die Initialtemperatur, vorherrscht. Es ist jedoch auch möglich, dass zwischen der Abluftleitungsanordnung und der anschließenden LLW-Abluftströmungsanordnung ein oder mehrere Wärmetauscher zwischengeschaltet sind, sodass beispielsweise die Temperatur an der Abluftleitungsanordnung größer ist als die Initialtemperatur.

Mithin ist das Trocknungssystem ausgebildet, um die Abluft aus der Trocknungsanlage über die Abluftleitungsanordnung und im Anschluss über die LLW-Abluftströmungsanordnung zumindest mittelbar zum Luft-Luft-Wärmetauscher zu führen, sodass eine zumindest mittelbare Übertragung der Wärme aus der Abluft in der Abluftleitungsanordnung auf die Frischluft in dem Luft-Luft-Wärmetauscher erfolgt.

Im Ergebnis mindert der Luft-Luft-Wärmetauscher die Abluft aus der einspeisenden LLW-Abluftströmungsanordnung energetisch. Dies bedeutet, dass Wärmeenergie aus der Abluft von dem LLW-Abluftvolumen auf die Frischluft im LLW-Frischluftvolumen übertragen wird.

Das Trocknungssystem weist ferner einen Vorwärm-Wärmetauscher mit einem Vorwärmvolumen und einem Vorwärmdurchflussvolumen auf. Dabei ist der Vorwärm-Wärmetauscher ausgebildet zur Erwärmung der Frischluft, insbesondere der Umgebungsluft, von einer Außentemperatur auf die geregelte Frischlufteinströmtemperatur. Damit dient der Vorwärm-Wärmetauscher als Mittel zur Regelung der geregelten Frischlufteinströmtemperatur.

Die Außentemperatur kann beispielsweise und nicht limitierend im Winter minus 20 Grad Celsius und im Sommer 35 Grad Celsius betragen. Dies kann in der Regel nicht beeinflusst werden, da regelmäßig Umgebungsluft eingespeist wird, welche mitunter jahreszeitabhängig unterschiedliche Temperaturen aufweist. Somit gilt als Außentemperatur beispielsweise und nicht limitierend eine Temperatur außerhalb des Trocknungssystems, insbesondere eine nicht wesentlich aufgeheizte Hallentemperatur und/oder eine Hallenaußentemperatur.

Das Trocknungssystem weist ferner auf eine Zuluftleitungsanordnung zur Einspeisung der Frischluft mit der Außentemperatur. Die Frischluft wird bevorzugt eingespeist in den Vorwärm-Wärmetauscher, besonders bevorzugt in das Vorwärmvolumen des Vorwärm-Wärmetauschers.

Dabei verbindet die einspeisende LLW-Frischluftströmungsanordnung den Vorwärm-Wärmetauscher zumindest mittelbar mit dem Luft-Luft-Wärmetauscher, um die Frischluft mit der geregelten Frischlufteinströmtemperatur, für den Luft-Luft-Wärmetauscher, insbesondere für das LLW-Frischluftvolumen des Luft-Luft-Wärmetauschers, bereitzustellen.

Die geregelte Frischlufteinströmtemperatur kann beispielsweise und nicht limitierend 35 Grad Celsius betragen.

Da bei konventionellen Trocknungssystemen die innerhalb des Trocknungssystems heißeste Luft, nämlich die Abluft aus dem erfolgten Trocknungsprozess, aus der einspeisenden LLW-Abluftströmungsanordnung auf die kälteste Luft, nämlich die Frischluft, insbesondere Umgebungsluft, trifft, wird das hohe Temperaturniveau der Abluft bereits im Luft-Luft-Wärmetauscher vollständig ausgenutzt, was dazu führt, dass die erreichbare LLW-Austrittstemperatur gegenüber der Erfindung physikalisch beschränkt ist. Die hieraus resultierende LLW-Austrittstemperatur ist somit im Wesentlichen eine Durchschnittstemperatur der Initialtemperatur und der nicht geregelten Frischlufteinströmtemperatur. Dies führt dazu, dass die LLW-Austrittstemperatur stark abhängig ist von der Jahreszeit beziehungsweise von der Außentemperatur der benötigten Frischluft.

Dies bedeutet beispielsweise, also nicht limitierend, bei einem konventionellen Trocknungssystem im Winter, bei einer Frischluft-Außentemperatur von minus 20 Grad Celsius und einer Abluft-Initialtemperatur von 85 Grad Celsius, dass die zur beispielhaften Trocknung des Faserstoffs verfügbare LLW-Austrittstemperatur der aufgewärmten Frischluft in etwa nur 45 Grad Celsius beträgt. Bei einer benötigten Frischluft-Trocknungstemperatur von etwa 85 Grad Celsius in der Trocknungsanlage, ist die Wärmedifferenz von 40 Grad Celsius in einem späteren Prozessschritt, jedoch noch vor der Trocknungsanlage durch einen oder mehrere weitere Wärmetauscher auszugleichen. Dies stellt einen sehr energiereichen Prozessschritt dar und erfordert in der Regel weitere Wärmeeinbringung durch höherkalorische Energiequellen, etwa Gasverbrenner. Die Abluft-Initialtemperatur fällt durch diesen Vorgang von 85 Grad Celsius auf 55 Grad Celsius ab, sodass die in weiteren Prozessschritten nutzbare Abluft-Folgetemperatur auf im Wesentlichen maximal 55 Grad Celsius limitiert ist. Dieser beispielhafte Modus wird als Wintermodus bezeichnet.

Sofern bei demselben konventionellen Trocknungssystem im Sommer die Frischluft-Außentemperatur 35 Grad Celsius und die Abluft-Initialtemperatur 85 Grad Celsius beträgt, liegt die zur beispielhaften Trocknung des Faserstoffs verfügbare LLW-Austrittstemperatur der aufgewärmten Frischluft bei in etwa 65 Grad Celsius. Bei einer benötigten Frischluft-Trocknungstemperatur von etwa 85 Grad Celsius in der Trocknungsanlage, ist die Wärmedifferenz von 20 Grad Celsius in einem späteren Prozessschritt, jedoch noch vor der Trocknungsanlage durch einen oder mehrere weitere Wärmetauscher auszugleichen. Dies stellt einen gegenüber dem Wintermodus weniger energiereichen Prozessschritt dar und erfordert in der Regel weitere Wärmeeinbringung durch höherkalorische Energiequellen, etwa Gasverbrenner. Die Abluft-Initialtemperatur fällt durch diesen Vorgang von 85 Grad Celsius auf 70 Grad Celsius ab, sodass die in weiteren Prozessschritten nutzbare Abluft-Folgetemperatur auf im Wesentlichen maximal 70 Grad Celsius limitiert ist. Dieser beispielhafte Modus wird als Sommermodus bezeichnet.

Das vorgenannte konventionelle Trocknungssystem hat somit den Nachteil, dass die nutzbare LLW-Austrittstemperatur und die nutzbare Abluft-Folgetemperatur erheblich von der Außentemperatur abhängen. Um einen sicherzustellen, dass die Trocknungsanlage ganzjährig fehlerfrei betrieben werden kann, ist das Trocknungssystem somit für den Winterbetrieb zu dimensionieren, wodurch erhebliche Produktions- und Betriebskosten für die höherkalorischen Energiequellen entstehen. Erst die vorliegende Lösung ermöglicht eine Simulation beziehungsweise Imitation eines kontinuierlichen Sommermodus, wobei eine geregelte Frischlufteinströmtemperatur genutzt wird, sodass es für die Anlagendimensionierung nicht mehr auf die Wintertemperaturen ankommt.

Erwähnenswert ist, dass die eingebrachte Energie im Vorwärm-Wärmetauscher zum Erhöhen der Frischlufttemperatur von der Außentemperatur auf die geregelte Frischlufteinströmtemperatur mit Niedertemperatur erfolgt. Dies hat den Vorteil, dass ein bei konventionellen Trocknungssystemen ungenutztes Temperaturniveau genutzt wird, sodass der Gesamtwirkungsgrad des Trocknungssystems mit Bezug auf die nutzbare Abluft-Folgetemperatur der Abluft erhöht wird.

Da die geregelte Frischlufteinströmtemperatur auch im Winter höher ist als bei konventionellen Trocknungssystemen, ist die Abluft-Folgetemperatur bei der vorgeschlagenen Lösung ganzjährig ähnlich zum Sommermodus, sodass erstmalig eine ganzjährige Nutzung der Abluft mit der Abluft-Folgetemperatur möglich ist. Wegen des konstant simulierten Sommermodus und des damit einhergehenden höheren Temperaturniveaus gegenüber dem Wintermodus, ist der Gesamtwirkungsgrad des Trocknungssystems gegenüber konventionellen Trocknungssystemen gesteigert, da durch das in der ausspeisenden LLW-Abluftströmungsanordnung geförderte Medium mit der gegenüber dem Wintermodus konstant erhöhten Abluft-Folgetemperatur höherkalorische Folgesysteme bedienbar sind, welche sonst im Winter nicht mit demselben Temperaturniveau bedienbar sind.

Anders formuliert bedeutet dies, dass bei konventionellen Trocknungssystemen ohne den Vorwärm-Wärmetauscher im Wintermodus der ausspeisenden LLW-Frischluftströmungsanordnung ein Wärmetauscher nachgeschaltet war, um die gewünschte LLW-Austrittstemperatur eines geförderten Mediums zu erzielen. Der ausspeisenden LLW-Abluftströmungsanordnung war ein Wärmetauscher nachgeschaltet, sofern die im Wintermodus vorhandene Abluft-Folgetemperatur für Folgeprozesse nicht ausreichend war. Die vorgeschlagene Lösung spart mithin durch die Integration des Vorwärm-Wärmetauschers eine vollständige Wärmestufe im Sinne einer Nachheizung ein.

Sofern die Formulierungen kalorisch, insbesondere nieder- oder höherkalorisch, verwendet werden, gilt als niederkalorisch sämtliche Wärme im Medium, die kleiner ist als die Medienwärme in der ausspeisenden LLW-Abluftströmungsanordnung. Dementsprechend gilt als höherkalorisch sämtliche Wärme im Medium, die größer ist als die Medienwärme in der ausspeisenden LLW-Abluftströmungsanordnung. Analog können auch Temperaturen als Vergleichswert angesetzt werden, wobei dann die Abluft-Folgetemperatur in der ausspeisenden LLW-Abluftströmungsanordnung in analoger Weise als Übergang vom Nieder- zum Höherkalorischen gilt.

Insbesondere ermöglicht dies eine direkte oder indirekte Niedertemperatur-Abwärmenutzung als Vorstufe einer Luft-Luft-Wärmerückgewinnung. Dabei kann die Abwärme aus dem eigentlichen Trocknungsprozess oder aus anderen Prozessen genutzt werden. Des Weiteren wird insbesondere eine optimierte, ganzjährige Ausgestaltung der Luft-Luft-Wärmerückgewinnung auf Basis der klimatischen Sommertemperaturwerte vorgeschlagen.

Mit Vorzug betrifft ein Aspekt auch die Nutzung der Vorwärmlösung als "Anti-Icing-Ersatz" in klimatisch kalten Regionen. Dabei wird insbesondere ein Teil der bereits vorgewärmten Zuluft wieder mit der Ansaugluft vermischt. Hierdurch kann ein bislang problematisches Einfrieren während der Luft-Luft-Wärmerückgewinnung vermieden werden. Es ist auch möglich, dass mit einem entsprechendem Wärmeträger bis auf umgebungsbedingt sichere Temperaturen vorgewärmt wird.

Gegenüber einer klassischen Luft-Luft-Wärmerückgewinnung erfolgt im Sinne einer Leistungssteigerung bei gleichem Energieeintrag bis zu etwa 30 Prozent höhere Energieausbeute.

Diese Art von Anwendungen kann insbesondere an jeder beliebigen Wärmerückgewinnung nachgerüstet werden. Es hat sich gezeigt, dass die vorgeschlagene Lösung dem aktuellen Ziel einer Minderung von Primärenergie entspricht. Schließlich ist eine hohe Ausnutzung der Abluftenergie ganzjährlich zielführend, einerseits für eine Senkung des Primärenergieeinsatzes und andererseits für eine Senkung der CO2 Emissionen.

Gemäß einer modifizierten Ausführungsform ist vorgesehen, dass
das Trocknungssystem zumindest einen Medien-Wärmetauscher aufweist, der ausgebildet ist, um mit einem Medium beaufschlagt zu werden, um die Frischluft aus der ausspeisenden LLW-Frischluftströmungsanordnung auf eine vordefinierte Prozesstemperatur einzustellen, die der Trocknungsanlage über eine von dem Trocknungssystem umfassten Durchströmanordnung zugeführt wird. Durch die mehrstufige Ausgestaltung kann die vordefinierte Prozesstemperatur, beispielsweise die Trocknungstemperatur, präziser eingestellt werden.

Bevorzugt beträgt die vordefinierte Prozesstemperatur zwischen mindestens einschließlich 80 bis höchstens einschließlich 120 Grad Celsius.

Gemäß einer modifizierten Ausführungsform ist vorgesehen, dass
der Medien-Wärmetauscher ausgebildet ist, um mit Frischdampf, Öl, Heißwasser, Salzlösung, Wasserstoff, Fernwärme, Strom, Gasverbrennung und/oder einer Mischung daraus beaufschlagt zu werden, um die Frischluft auf die vordefinierte Prozesstemperatur einzustellen. Es hat sich herausgestellt, dass die obigen Energiequellen einen zuverlässigen Betrieb des Medien-Wärmetauschers ermöglichen.

Gemäß einer modifizierten Ausführungsform ist vorgesehen, dass
der Medien-Wärmetauscher einen oder mehrere Abwärmetauscher zwischen dem Luft-Luft-Wärmetauscher und der Trocknungsanlage aufweist, wobei der oder die Abwärmetauscher des Medien-Wärmetauschers zumindest mittelbar Wärme aus einem autarken Dampf-Kondensat-System nutzt oder nutzen, das zur Trocknung des Trocknungsmediums in der Trocknungsanlage ausgebildet ist, um die Frischluft der LLW-Frischluftströmungsanordnung auf die vordefinierte Prozesstemperatur aufzuheizen und mittels der Durchströmanordnung in die Trocknungsanlage weiterzuleiten. Ein Dampf-Kondensat-System ist ein technisches System, das Dampf nutzt, der sonst ungenutzt in die Umgebung entweichen würde. Damit handelt es sich um ein in sich geschlossenen System, um die Wärme des Dampfs energieeffizient der Trocknung bereitzustellen. Es hat sich herausgestellt, dass dies einen zuverlässigen Betrieb des Medien-Wärmetauschers ermöglicht und eine systemeffiziente Ausgestaltung bereitstellt.

Die Erwärmung der Frischluft kann mit Vorzug mittels Abwärme aus dem Gesamtprozess erfolgen, beispielsweise aber auch isoliert oder zusätzlich durch das Dampf-Kondensat-System.

Gemäß einer modifizierten Ausführungsform ist vorgesehen, dass das Trocknungssystem einen Luft-Wasser-Wärmetauscher, abgekürzt LWW, mit einem LWW-Übertragungsvolumen und einem LWW-Aufwärmvolumen aufweist, wobei der Luft-Wasser-Wärmetauscher ausgebildet ist zur Erwärmung eines ersten flüssigen und/oder gasförmigen Strömungswärmemediums, insbesondere im Wesentlichen Wasser, im LWW-Aufwärmvolumen aus Wärme vom LWW-Übertragungsvolumen hin zum LWW-Aufwärmvolumen,
wobei das Trocknungssystem weiterhin eine Strömungswärmeanordnung aufweist, die ausgebildet ist zur Weiterleitung des ersten Strömungswärmemediums aus dem LWW-Aufwärmvolumen.

Insbesondere, und nicht zwangsweise mit dem vorstehenden Merkmalskomplex in Verbindung stehend, weist das Trocknungssystem weiterhin eine Wärmeeinspeiseanordnung auf, die ausgebildet ist zur Einspeisung des ersten und/oder mehrerer Strömungswärmemedien in das Vorwärmdurchflussvolumen. Hierdurch kann Wärme aus dem Prozess entnommen werden und in das Trocknungssystem rückgeführt werden, woraus eine Wirkungsgraderhöhung resultiert. Somit kann hiermit Niedertemperaturenergie genutzt werden, welche bisher ungenutzt dissipierte. Es handelt sich somit um eine effiziente Methode, um grundsätzlich einen Sommermodus der Trocknungsanlage ganzjährig zu simulieren.

Die Formulierung, dass das Strömungswärmemedium beispielhaft im Wesentlichen Wasser sein kann, bedeutet, dass es sich um ein frostsicheres Medium handelt. Mithin wird durch den Zusatz der Formulierung "im Wesentlichen" impliziert, dass Wasser ein Frostschutzmittel hinzugefügt wird. Sofern die Lösung auch an anderen Stellen im Wesentlichen Wasser vorschlägt, ist ein artgleicher Ansatz zu wählen.

Sofern die Formulierung Strömungswärmemedium verwendet wird, ist bevorzugt, dass dieses frostsicher ist. Sofern die Lösung auch an anderen Stellen ein Strömungswärmemedium vorschlägt, ist ein artgleicher Ansatz zu wählen.

Sofern mehrere Strömungswärmemedien verwendet werden, die in das Vorwärmdurchflussvolumen eingespeist werden, können diese aus diversen Quellen stammen und sind nicht auf den Luft-Wasser-Wärmetauscher limitiert.

Gemäß einer modifizierten Ausführungsform ist vorgesehen, dass das erste Strömungswärmemedium zumindest mittelbar aus der Strömungswärmeanordnung zur zumindest mittelbaren Regelung der Frischlufteinströmtemperatur in die Wärmeeinspeiseanordnung einströmt, und/oder wobei die Strömungswärmeanordnung den Luft-Wasser-Wärmetauscher zumindest mittelbar mit dem Vorwärm-Wärmetauscher verbindet, um das aufgeheizte Strömungswärmemedium zur zumindest mittelbaren Regelung der Frischlufteinströmtemperatur von dem LWW-Aufwärmvolumen des Luft-Wasser-Wärmetauschers in den Vorwärm-Wärmetauscher weiterzuleiten. Hiermit wird Wärme im niederkalorischen Bereich genutzt, die sonst dissipiert wäre.

Die Formulierung zumindest mittelbar bedeutet, dass eine grundsätzliche Wirkverbindung besteht, auch wenn weitere strukturelle Komponenten zwischengeschaltet werden können. So wird beispielsweise Wärme des ersten Strömungswärmemediums auf die Frischluft übertragen, was eine zumindest mittelbare Wärmebertragung darstellt. Sofern die Lösung auch an anderen Stellen die Formulierung zumindest mittelbar vorschlägt, ist ein artgleicher Ansatz zu wählen.

Gemäß einer modifizierten Ausführungsform ist vorgesehen, dass
der Luft-Wasser-Wärmetauscher ein Niedertemperatur-Luft-Wasser-Wärmetauscher ist, wobei das Strömungswärmemedium ein Niedertemperaturwärmemedium mit einer Niedertemperatur ist, und
wobei die Strömungswärmeanordnung eine Niedertemperaturwärmeleitung ist,
wobei die Niedertemperatur des Strömungswärmemediums ausgehend aus dem Luft-Wasser-Aufwärmvolumen größer ist als die Außentemperatur in der Zuluftleitungsanordnung. Dies optimiert die Nutzung eines permanent, also ganzjährig, nutzbaren Sommermodus.

Sofern die Formulierung Niedertemperatur verwendet wird, gilt als Niedertemperatur die Medientemperatur, die kleiner ist als die Abluft-Folgetemperatur in der ausspeisenden LLW-Abluftströmungsanordnung. Dementsprechend gilt als Hochtemperatur sämtliche Medientemperatur, die größer ist als die Abluft-Folgetemperatur in der ausspeisenden LLW-Abluftströmungsanordnung.

Als Außentemperatur gilt die Temperatur der in die Zuluftleitungsanordnung eingespeiste Frischluft.

Gemäß einer modifizierten Ausführungsform ist vorgesehen, dass
das Trocknungssystem (1) eine Wärmeeinspeiseanordnung aufweist, insbesondere die Wärmeeinspeiseanordnung nach einem der Ansprüche 5 bis 7, die ausgebildet ist zur Einspeisung eines ersten oder mehrerer Strömungswärmemedien mit einer Vorwärmeinströmtemperatur in das Vorwärmdurchflussvolumen,
wobei die Vorwärmeinströmtemperatur kleiner ist als die Initialtemperatur. Dies optimiert die Nutzung eines permanent, also ganzjährig, nutzbaren Sommermodus.

Sofern jedwede Temperaturen genannt werden, gelten diese für die jeweilige Medientemperatur. Dies ist für alle Temperaturen anwendbar.

Gemäß einer modifizierten Ausführungsform ist vorgesehen, dass
das Trocknungssystem eine oder mehrere Wärmetauschervorrichtungen zwischen dem Luft-Luft-Wärmetauscher und dem Luft-Wasser-Wärmetauscher aufweist, wobei die Wärmetauschervorrichtung/en Wärme aus der Abluft in der ausspeisenden LLW-Abluftströmungsanordnung nutzt oder nutzen, um ein Medium, bevorzugt ein flüssiges Medium, besonders bevorzugt im Wesentlichen Wasser, aufzuheizen. Dies optimiert die Nutzung eines permanent, also ganzjährig, nutzbaren Sommermodus. Beispielhaft damit auch im Winter eine Medienerwärmung, deren Wärme für Folgeprozesse nutzbar ist.

Gemäß einer modifizierten Ausführungsform ist vorgesehen, dass
ein Gasmedium, insbesondere im Wesentlichen Verbrennungsgas, als Trägermedium zur Trocknung des Trocknungsmediums in der Trocknungsanlage verwendet wird.

Gemäß einer modifizierten Ausführungsform ist vorgesehen, dass
ein bestehendes Trocknungssystem mit mindestens einem vorgenannten Luft-Luft-Wärmetauscher und einer vorgenannten Trocknungsanlage zu einem vorgeschlagenen Trocknungssystem nachgerüstet ist. Dies bedeutet, dass konventionelle Trocknungssysteme jederzeit optimiert werden können, um ganzjährig im Sommermodus betrieben zu werden und damit den Gesamtwirkungsgrad zu verbessern, ohne das Trocknungssystem gänzlich abzureißen und neu bauen zu müssen. Insbesondere ist der Vorwärm-Wärmetauscher mit den Verbindungskomponenten zum Trocknungssystem nachrüstbar.

Gemäß einer modifizierten Ausführungsform ist vorgesehen, dass das Trocknungssystem derart ausgebildet ist, dass die Frischluft in der einspeisenden LLW-Frischluftströmungsanordnung mit der geregelten Frischlufteinströmtemperatur die LLW-Austrittstemperatur in der ausspeisenden LLW-Frischluftströmungsanordnung zumindest mittelbar, insbesondere unmittelbar, thermisch beeinflusst, wobei insbesondere eine steigende Frischlufteinströmtemperatur eine steigende Austrittstemperatur und eine steigende Abluft-Folgetemperatur herbeiführt und eine sinkende Frischlufteinströmtemperatur eine sinkende LLW-Austrittstemperatur und eine sinkende Abluft-Folgetemperatur herbeiführt. Gegenüber herkömmlichen Luft-Luft-Wärmetauschern kann die Frischluft hierdurch höher erwärmt werden, als es bei konventionellen Trocknungssystemen der Fall ist und die Abluft aus der einspeisenden LLW-Abluftströmungsanordnung wird hin zur ausspeisenden LLW-Abluftströmungsanordnung nicht so stark abgekühlt, wie beispielsweise bei einem klassischem Gegenstromwärmetauscher. Dadurch bleibt im Austritt des Luft-Luft-Wärmetauschers das Temperaturniveau weniger reduziert als im Stand der Technik und es können weitere Prozess mit einer hohen Kalorik und Temperaturgefälle versorgt werden.

Weiter vorgesehen ist Trocknungsverfahren zur Trocknung eines Trocknungsmediums unter Verwendung eines vorgenannten Trocknungssystems, das Trocknungsverfahren aufweisend mindestens folgenden Schritt:
Erwärmen der Frischluft in dem Vorwärm-Wärmetauscher, insbesondere in dem Vorwärmvolumen, von der Außentemperatur auf die geregelte
Frischlufteinströmtemperatur. Hierbei gelten die obenstehenden Vorteile in gleicher Weise.

Gemäß einer modifizierten Ausführungsform ist vorgesehen, dass
das Erwärmen der Frischluft in dem Vorwärm-Wärmetauscher, insbesondere in dem Vorwärmvolumen, erfolgt unter Einfluss des aus der vorgenannten Wärmeeinspeiseanordnung eingespeisten ersten und/oder mehrerer Strömungswärmemedien in das Vorwärmdurchflussvolumen.

Jedes Merkmal, das für ein Ausführungsbeispiel der Anspruchskategorie des Trocknungssystems beschrieben wird, kann auch in entsprechender Weise in der Anspruchskategorie des Trocknungsverfahrens eingesetzt werden. Es ist bevorzugt, dass die Reihenfolge von Verfahrensschritten, soweit nicht technisch in einer expliziten Reihenfolge erforderlich, variiert werden kann.

Nachfolgend findet sich ein beispielhaftes und nicht limitierendes Beispiel des Trocknungssystems, wobei einzelne Systemeinheiten, wie nachfolgend erläutert, nicht unbedingt Bestandteil des Trocknungssystems sein müssen. So ist das nachfolgende Beispiel des Trocknungssystems, wie bereits erwähnt, nicht limitierender Natur. Insbesondere können die Merkmale gemäß den Lehren der einzelnen Ansprüche aus der nachfolgenden Erläuterung ausgeschlossen oder miteinander kombiniert werden. Das Trocknungssystem umfasst insbesondere den Vorwärm-Wärmetauscher, den Luft-Luft-Wärmetauscher und die Trocknungsanlage. Optional und nicht verbindlich kann die Wärmetauschervorrichtung mit den beschriebenen Merkmalen in das Trocknungssystem eingebunden werden. Weiterhin optional und nicht verbindlich kann der Luft-Wasser-Wärmetauscher mit den beschriebenen Merkmalen in das Trocknungssystem eingebunden werden. Weiterhin optional und nicht verbindlich kann der Medien-Wärmetauscher mit den beschriebenen Merkmalen in das Trocknungssystem eingebunden werden. Es ist möglich, dass nur die Wärmetauschervorrichtung, nur der Luft-Wasser-Wärmetauscher oder nur der Medien-Wärmetauscher einbezogen wird. Es sind jedoch auch Permutationen von Wärmetauschervorrichtung, Luft-Wasser-Wärmetauscher und Medien-Wärmetauscher möglich. Beispielsweise Wärmetauschervorrichtung und Luft-Wasser-Wärmetauscher, Medien-Wärmetauscher und Luft-Wasser-Wärmetauscher oder auch Wärmetauschervorrichtung und Medien-Wärmetauscher. Es können auch alle drei Systemvorrichtungen vorhanden sein.

Die Frischluft fließt insbesondere über die Zuluftleitungsanordnung in den Vorwärm-Wärmetauscher, insbesondere in dessen Vorwärmvolumen, und verlässt den Vorwärm-Wärmetauscher über die einspeisende LLW-Frischluftströmungsanordnung. Ebenfalls strömt insbesondere ein erstes Strömungswärmemedium, insbesondere im Wesentlichen Wasser, und gegebenenfalls weitere Strömungswärmemedien in den Vorwärm-Wärmetauscher, insbesondere in das Vorwärmdurchflussvolumen, und verlässt den Vorwärm-Wärmetauscher anschließend. Die in das Vorwärmvolumen strömende Frischluft hat insbesondere mit ihrer Außentemperatur eine geringere Temperatur als das erste oder weitere Strömungswärmemedien mit der Vorwärmeinströmtemperatur, sodass die Frischluft anschließend eine geregelte, also per Wärmeübergang gewünscht eingestellte, Frischlufteinströmtemperatur aufweist.

Der Vorwärm-Wärmetauscher ist insbesondere mit dem Luft-Luft-Wärmetauscher wirkverbunden. Der Luft-Luft-Wärmetauscher weist ein LLW-Abluftvolumen auf. Das LLW-Abluftvolumen nimmt über eine einspeisende LLW-Abluftströmungsanordnung Luft, bevorzugt mit Feuchtigkeit beladene Abluft, besonders bevorzugt mit Feuchtigkeit beladene Abluft aus dem Trocknungsprozess in der Trocknungsanlage, mit einer Initialtemperatur auf und gibt diese Luft über die ausspeisende LLW-Abluftströmungsanordnung mit der Abluft-Folgetemperatur ab. Der Luft-Luft-Wärmetauscher weist zudem ein LLW-Frischluftvolumen auf. Das LLW-Frischluftvolumen nimmt die Frischluft aus der einspeisenden LLW-Frischluftströmungsanordnung mit der geregelten Frischlufteinströmtemperatur auf und gibt diese Frischluft an die ausspeisende LLW-Frischluftströmungsanordnung mit der LLW-Austrittstemperatur ab.

Die vom Vorwärm-Wärmetauscher über die einspeisende LLW-Frischluftströmungsanordnung in den Luft-Luft-Wärmetauscher, insbesondere in das LLW-Frischluftvolumen, strömende Frischluft, hat insbesondere eine geringere Temperatur als es die Luft mit der Initialtemperatur aus der einspeisenden LLW-Abluftströmungsanordnung hat. Allerdings hat die über die einspeisende LLW-Frischluftströmungsanordnung in den Luft-Luft-Wärmetauscher, insbesondere in das LLW-Frischluftvolumen, strömende Frischluft mit ihrer geregelten Frischlufteinströmtemperatur eine höhere Temperatur als es der Umgebungsluft entspricht. Dies führt dazu, dass die LLW-Austrittstemperatur eine höhere Temperatur hat, als wenn die Frischluft mit der Umgebungstemperatur in das LLW-Frischluftvolumen geströmt wäre. Auch hat dies zur Folge, dass die Temperatur im LLW-Abluftvolumen nicht wie bei konventionellen Trocknungssystemen abfällt, sodass die Luft in der ausspeisenden LLW-Abluftströmungsanordnung mit der Abluft-Folgetemperatur, anders als bei konventionellen Trocknungsanlagen, für Folgeprozesse von hohem Interesse und nutzbar ist.

Unabhängig von den weiteren Merkmalen ist vorgesehen, dass die Frischluft mit der LLW-Austrittstemperatur über die ausspeisende LLW-Frischluftströmungsanordnung in den Medien-Wärmetauscher strömt. In diesem Medien-Wärmetauscher können diverse Wärmeübergangsprozesse erfolgen, sodass die Frischluft anschließend mit einer vordefinierten Prozesstemperatur aus dem Medien-Wärmetauscher und entlang der Durchströmanordnung in die Trocknungsanlage strömt. Sofern kein Medien-Wärmetauscher vorgesehen ist, kann die LLW-Austrittstemperatur gegebenenfalls auch direkt der vordefinierten Prozesstemperatur entsprechen.

Aus der Durchströmanordnung kommend, oder falls kein Medien-Wärmetauscher vorhanden ist, aus der ausspeisenden LLW-Frischluftströmungsanordnung kommend, strömt die Frischluft für den Trocknungsprozess des Trocknungsmediums in die Trocknungsanlage und strömt aus dieser nach dem Trocknungsprozess des Trocknungsmediums in die Abluftleitungsanordnung, wobei die Frischluft dann mit Feuchtigkeit beladene Abluft ist. Die Feuchtigkeit aus der Abluft entstammt dem getrockneten Trocknungsmedium.

Diese mit Feuchtigkeit beladene Abluft kann unmittelbar, oder mittelbar, also beispielhaft nach weiteren Wärmeübergangsprozessen, über die einspeisende LLW-Abluftströmungsanordnung mit der Temperatur, welche ab dem Prozessschritt als Initialtemperatur bezeichnet wird, in den Luft-Luft-Wärmetauscher eingespeist werden.

Die aus dem Luft-Luft-Wärmetauscher entlang der ausspeisenden LLW-Abluftströmungsanordnung strömende Luft kann über die Wärmetauschervorrichtung zum Wärmeübertrag mit einem flüssigen Medium wechselwirkend entlang einer oder mehrerer Fluidleitungen zum Luft-Wasser-Wärmetauscher strömen. Optional kann die aus dem Luft-Luft-Wärmetauscher entlang der ausspeisenden LLW-Abluftströmungsanordnung strömende Abluft auch direkt zum Luft-Wasser-Wärmetauscher strömen.

Der Luft-Wasser-Wärmetauscher weist insbesondere ein LWW-Übertragungsvolumen und ein LWW-Aufwärmvolumen auf. Im Luft-Wasser-Wärmetauscher durchströmt die Abluft insbesondere ein LWW-Übertragungsvolumen und tauscht dabei Wärme mit einem das LWW-Aufwärmvolumen durchströmende erste Strömungswärmemedium aus.

Das erste Strömungswärmemedium und/oder weitere Strömungswärmemedien können dann durch eine Strömungswärmeanordnung aus dem LWW-Aufwärmvolumen ausströmend in eine Wärmeeinspeiseanordnung einströmen, welche wiederum zum Wärmeaustausch in das Vorwärmdurchflussvolumen des Vorwärm-Wärmetauschers einströmt. Diesem Kreislauf folgend wider Restwärme aus dem Vorwärm-Wärmetauschers wieder zum Vorwärm-Wärmetauschers zurückgeführt.

### Kurze Beschreibung der Zeichnung

Nachfolgend wird die Erfindung unter Bezugnahme auf die anliegende Zeichnung anhand bevorzugter Ausführungsbeispiele näher erläutert.

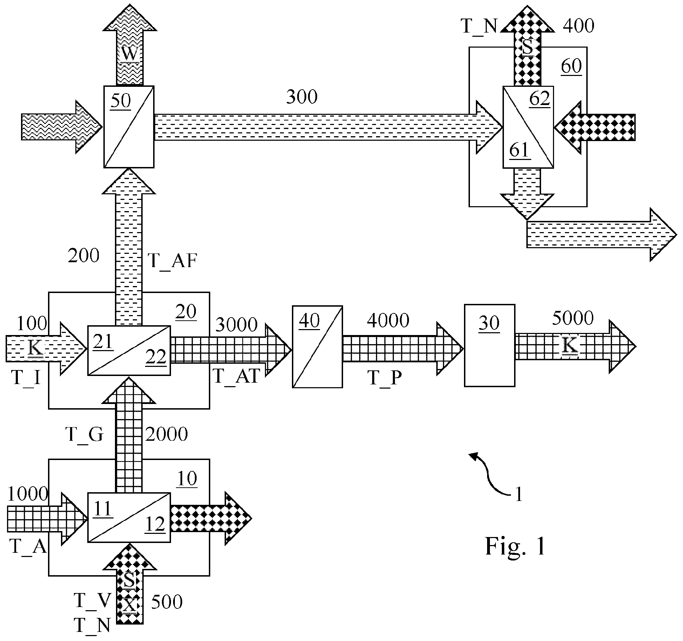

In der Zeichnung zeigt
- Figur 1: ein Schema eines Trocknungssystems gemäß einem bevorzugten Ausführungsbeispiel der Erfindung.

### Detaillierte Beschreibung eines Ausführungsbeispiels

Das beschriebene Ausführungsbeispiel ist lediglich als Beispiel zu verstehen, das im Rahmen der Ansprüche auf vielfältige Weise modifiziert und/oder ergänzt werden kann.

Jedes Merkmal, das für ein Ausführungsbeispiel der Anspruchskategorie eines Trocknungssystems beschrieben wird, kann auch in entsprechender Weise in der Anspruchskategorie eines Trocknungsverfahrens eingesetzt werden.

Figur 1 zeigt ein Trocknungssystem 1 zur Trocknung eines Trocknungsmediums. Die Trocknung des Trocknungsmediums ist insbesondere eine Trocknung von Faserstoffen, beispielsweise und nicht limitierend Papier oder Karton.

Das in Figur 1 gezeigte Trocknungssystem 1 weist gemäß einem bevorzugten Ausführungsbeispiel die nachfolgend beschriebenen Komponenten auf.

Die in Figur 1 gezeigten Pfeile, insbesondere die Anordnungen mit den Bezugszeichen 100, 200, 300, 400, 500, 1000, 2000, 3000, 4000 und 5000, sind schematische Darstellungen von medienführenden Durchflusssystemen, insbesondere Rohrbeziehungsweise Kanalleitungen, mit dargestellter Strömungsrichtung, wobei gleichbleibende Medien gleichbleibende Schraffuren in den Pfeilen aufweisen. Es ist klarzustellen, dass es sich bei Figur 1 um eine Prinzipdarstellung handelt, welche sich zur Wärmeübertragung nicht auf Gleichstrom- oder Kreuzgegenstromausführungen beschränkt. Grundsätzlich sind beide Wärmeübertragungsmöglichkeiten vom Schutzumfang umfasst.

Das Trocknungssystem 1 weist auf einen Luft-Luft-Wärmetauscher, abgekürzt LLW, 20 mit einem LLW-Abluftvolumen 21 und einem LLW-Frischluftvolumen 22. Hierbei ist der Luft-Luft-Wärmetauscher LLW 20 beispielsweise ein Rohr- oder Plattenwärmetauscher.

Der Luft-Luft-Wärmetauscher 20 weist auf eine einspeisende LLW-Abluftströmungsanordnung 100 zum Einströmen von Abluft K mit einer Initialtemperatur T_I in das LLW-Abluftvolumen 21.

Die Abluft K ist beispielhaft und nicht limitierend Luft, die bereits Bestandteil eines Trocknungsprozesses war und insbesondere folglich eine höhere Feuchtigkeit aufweist als Frischluft, insbesondere Umgebungsluft. Die Initialtemperatur T_I kann beispielsweise und nicht limitierend 85 Grad Celsius betragen.

Der Luft-Luft-Wärmetauscher 20 weist ferner auf eine ausspeisende LLW-Abluftströmungsanordnung 200 Abluft-Folgetemperatur T_AF zum Ausströmen von Abluft K aus dem LLW-Abluftvolumen 21.

Der Luft-Luft-Wärmetauscher 20 weist ferner auf eine einspeisende LLW-Frischluftströmungsanordnung 2000 zum Einströmen von Frischluft mit einer geregelten Frischlufteinströmtemperatur T_G in das LLW-Frischluftvolumen 22.

Frischluft ist beispielhaft und nicht limitierend Luft, die noch kein systeminterner Bestandteil eines Trocknungsprozesses war. Bevorzugt gilt Umgebungsluft als Frischluft. Besonders bevorzugt weist die Frischluft eine geringere Feuchtigkeit auf als die Abluft K.

Der Luft-Luft-Wärmetauscher 20 weist ferner auf eine ausspeisende LLW-Frischluftströmungsanordnung 3000 zum Ausströmen von Frischluft mit einer LLW-Austrittstemperatur T_AT aus dem LLW-Frischluftvolumen 22.

Dabei sind das LLW-Abluftvolumen 21 und das LLW-Frischluftvolumen 22 derart ausgebildet, dass Wärme von dem LLW-Abluftvolumen 21 auf das LLW-Frischluftvolumen 22 übertragbar ist, um die Frischluft zu erwärmen.

Die Austrittstemperatur T_AT kann beispielsweise und nicht limitierend 67 Grad Celsius betragen.

Das Trocknungssystem 1 weist ferner auf eine Trocknungsanlage 30, die zur Trocknung des Trocknungsmediums ausgestaltet ist. Dabei ist die Trocknungsanlage 30 derart ausgebildet, dass die mindestens durch den Luft-Luft-Wärmetauscher 20 aufgewärmte und zumindest mittelbar aus der LLW-Frischluftströmungsanordnung 3000 ausgeströmte Frischluft als Trocknungsluft mit dem Trocknungsmedium interagiert. Dabei wird verdampfte Feuchtigkeit aus dem Trocknungsmedium aufgenommen und als mit Feuchtigkeit beladene Abluft K an eine Abluftleitungsanordnung 5000 ausgegeben. Mit Vorzug entspricht die Temperatur in der Abluftleitungsanordnung 5000 mindestens der Initialtemperatur T_I. Mit Vorzug wird die Abluft K aus der Abluftleitungsanordnung 5000 unmittelbar in die LLW-Abluftströmungsanordnung 100 weitergeleitet, sodass in beiden Anordnungen 100, 5000 im Wesentlichen eine ähnliche Temperatur, nämlich die Initialtemperatur T_I, vorherrscht. Es ist jedoch auch möglich, dass zwischen der Abluftleitungsanordnung 5000 und der anschließenden LLW-Abluftströmungsanordnung 100 ein oder mehrere Wärmetauscher zwischengeschaltet sind, sodass die Temperatur an der Abluftleitungsanordnung 5000 größer ist als die Initialtemperatur T_I.

Mithin ist das Trocknungssystem 1 ausgebildet, um die Abluft K aus der Trocknungsanlage 30 über die Abluftleitungsanordnung 5000 und im Anschluss über die LLW-Abluftströmungsanordnung 100 zumindest mittelbar zum Luft-Luft-Wärmetauscher 20 zu führen, sodass eine zumindest mittelbare Übertragung der Wärme aus der Abluft K in der Abluftleitungsanordnung 5000 auf die Frischluft in dem Luft-Luft-Wärmetauscher 20 erfolgt.

Im Ergebnis mindert der Luft-Luft-Wärmetauscher 20 die Abluft K aus der einspeisenden LLW-Abluftströmungsanordnung 100 energetisch. Dies bedeutet, dass Wärmeenergie aus der Abluft K von dem LLW-Abluftvolumen 21 auf die Frischluft im LLW-Frischluftvolumen 22 übertragen wird.

Das Trocknungssystem 1 weist ferner auf einen Vorwärm-Wärmetauscher 10 mit einem Vorwärmvolumen 11 und einem Vorwärmdurchflussvolumen 12, wobei der Vorwärm-Wärmetauscher 10 ausgebildet ist zur Erwärmung der Frischluft, insbesondere der Umgebungsluft, von einer Außentemperatur T_A auf die geregelte Frischlufteinströmtemperatur T_G.

Die Außentemperatur T_A kann beispielsweise und nicht limitierend minus 20 Grad Celsius betragen.

Das Trocknungssystem 1 weist ferner auf eine Zuluftleitungsanordnung 1000 zur Einspeisung der Frischluft mit der Außentemperatur T_A.

Dabei verbindet die einspeisende LLW-Frischluftströmungsanordnung 2000 den Vorwärm-Wärmetauscher 10 zumindest mittelbar mit dem Luft-Luft-Wärmetauscher 20, um die Frischluft mit der geregelten Frischlufteinströmtemperatur T_G, für den Luft-Luft-Wärmetauscher 20, insbesondere für das LLW-Frischluftvolumen 22 des Luft-Luft-Wärmetauschers 20, bereitzustellen.

Die geregelte Frischlufteinströmtemperatur T_G kann beispielsweise und nicht limitierend 35 Grad Celsius betragen.

Die Abluft-Folgetemperatur T_AF kann beispielsweise und nicht limitierend 70 Grad Celsius betragen.

Das Trocknungssystem 1 weist zumindest einen Medien-Wärmetauscher 40 auf, der ausgebildet ist, um mit einem Medium beaufschlagt zu werden, um die Frischluft aus der ausspeisenden LLW-Frischluftströmungsanordnung 3000 auf eine vordefinierte Prozesstemperatur T_P einzustellen. Die auf die vordefinierte Prozesstemperatur T_P eingestellte Frischluft wird der Trocknungsanlage 30 über eine von dem Trocknungssystem 1 umfassten Durchströmanordnung 4000 zugeführt.

Dabei ist der Medien-Wärmetauscher 40 ausgebildet, um mit Frischdampf, Öl, Heißwasser, Salzlösung, Wasserstoff, Fernwärme, Strom, Gasverbrennung und/oder einer Mischung daraus beaufschlagt zu werden, um die Frischluft auf die vordefinierte Prozesstemperatur T_P einzustellen.

Weiterhin ist vorgesehen, dass der Medien-Wärmetauscher 40 einen oder mehrere Abwärmetauscher zwischen dem Luft-Luft-Wärmetauscher 20 und der Trocknungsanlage 30 aufweist. Dabei nutzt bei der eine Abwärmetauscher oder nutzen mehrere Abwärmetauscher des Medien-Wärmetauschers 40 zumindest mittelbar Wärme aus einem autarken Dampf-Kondensat-System, das zur Trocknung des Trocknungsmediums in der Trocknungsanlage 30 ausgebildet ist, um die Frischluft der LLW-Frischluftströmungsanordnung 3000 auf die vordefinierte Prozesstemperatur T_P aufzuheizen und mittels der Durchströmanordnung 4000 in die Trocknungsanlage 30 weiterzuleiten.

Das in Figur 1 gezeigte Trocknungssystem 1 weist einen Luft-Wasser-Wärmetauscher, abgekürzt LWW, 60 mit einem LWW-Übertragungsvolumen 61 und einem LWW-Aufwärmvolumen 62 auf. Dabei ist der Luft-Wasser-Wärmetauscher 60 ausgebildet zur Erwärmung eines ersten flüssigen und/oder gasförmigen Strömungswärmemediums S, insbesondere im Wesentlichen Wasser, im LWW-Aufwärmvolumen 62 aus Wärme vom LWW-Übertragungsvolumen 61 hin zum LWW-Aufwärmvolumen 62.

Dabei weist das Trocknungssystem 1 weiterhin eine Strömungswärmeanordnung 400 auf, die ausgebildet ist zur Weiterleitung des ersten Strömungswärmemediums S aus dem LWW-Aufwärmvolumen 62.

Insbesondere weist das Trocknungssystem 1 weiterhin eine Wärmeeinspeiseanordnung 500 auf, die ausgebildet ist zur Einspeisung des ersten und/oder mehrerer Strömungswärmemedien S, X in das Vorwärmdurchflussvolumen 12.

Mit Vorzug strömt das erste Strömungswärmemedium S zumindest mittelbar aus der Strömungswärmeanordnung 400 zur zumindest mittelbaren Regelung der Frischlufteinströmtemperatur T_Gin die Wärmeeinspeiseanordnung 500 ein. Alternativ oder zusätzlich verbindet die Strömungswärmeanordnung 400 den Luft-Wasser-Wärmetauscher 60 zumindest mittelbar, beispielhaft und losgelöst von den anderen hiermit verbundenen Merkmalen über die Wärmeeinspeiseanordnung 500, mit dem Vorwärm-Wärmetauscher 10, um das aufgeheizte Strömungswärmemedium S zur zumindest mittelbaren Regelung der Frischlufteinströmtemperatur T_G von dem LWW-Aufwärmvolumen 62 des Luft-Wasser-Wärmetauschers 60 in den Vorwärm-Wärmetauscher 10 weiterzuleiten.

Bevorzugt ist der Luft-Wasser-Wärmetauscher 60 ein Niedertemperatur-Luft-Wasser-Wärmetauscher. In dem Fall ist das Strömungswärmemedium S ein Niedertemperaturwärmemedium mit einer Niedertemperatur T_N ist und die Strömungswärmeanordnung 400 ist eine Niedertemperaturwärmeleitung. Ferner ist zudem vorgesehen, dass die Niedertemperatur T_N des Strömungswärmemediums S ausgehend aus dem Luft-Wasser-Aufwärmvolumen 62 größer ist als die Außentemperatur T_A in der Zuluftleitungsanordnung 1000.

Mit Vorzug weist das Trocknungssystem 1 eine Wärmeeinspeiseanordnung 500 auf, die ausgebildet ist zur Einspeisung eines ersten oder mehrerer Strömungswärmemedien S, X mit einer Vorwärmeinströmtemperatur T_V in das Vorwärmdurchflussvolumen 12, wobei die Vorwärmeinströmtemperatur T_V kleiner ist als die Initialtemperatur T_I. Insbesondere wird zumindest das erste Strömungswärmemedium S aus der Strömungswärmeanordnung 400 unmittelbar, oder über Zwischenanordnungen, in die Wärmeeinspeiseanordnung 500 weitergeleitet. Dies kann auch unabhängig der hiermit verbundenen Merkmale erfolgen.

Weiterhin ist vorgesehen, dass das Trocknungssystem 1 eine Wärmetauschervorrichtung 50 oder mehrere Wärmetauschervorrichtungen 50 zwischen dem Luft-Luft-Wärmetauscher 20 und dem Luft-Wasser-Wärmetauscher 60 aufweist. Dabei nutzt die Wärmetauschervorrichtung 50 oder nutzen die Wärmetauschervorrichtungen 50 Wärme aus der Abluft K in der ausspeisenden LLW-Abluftströmungsanordnung 200, um ein Medium W, insbesondere im Wesentlichen Wasser, aufzuheizen.

Insbesondere wird ein Gasmedium, insbesondere im Wesentlichen Verbrennungsgas, als Trägermedium zur Trocknung des Trocknungsmediums in der Trocknungsanlage 30 verwendet.

Insbesondere kann ein bestehendes Trocknungssystem 1 mit mindestens einem Luft-Luft-Wärmetauscher 20 und einer Trocknungsanlage 30 zu einem in Figur 1 gezeigten Trocknungssystem 1 nachgerüstet werden.

Mit Vorzug ist das Trocknungssystem 1 derart ausgebildet, dass die Frischluft in der einspeisenden LLW-Frischluftströmungsanordnung 2000 mit der geregelten Frischlufteinströmtemperatur T_G die LLW-Austrittstemperatur T_AT in der ausspeisenden LLW-Frischluftströmungsanordnung 3000 zumindest mittelbar, insbesondere unmittelbar, thermisch beeinflusst. Eine mittelbare Beeinflussung liegt grundsätzlich dann vor, wenn noch weitere Komponenten zwischen der LLW-Frischluftströmungsanordnung 2000 und der ausspeisenden LLW-Frischluftströmungsanordnung 3000 angeordnet sind. Dabei führt insbesondere eine steigende Frischlufteinströmtemperatur T_G eine steigende Austrittstemperatur T_AT herbei und eine sinkende Frischlufteinströmtemperatur T_G führt eine sinkende LLW-Austrittstemperatur T_AT herbei.

Damit kann gegenüber herkömmlichen Luft-Luft-Wärmetauschern 20 die Frischluft höher erwärmt werden als bei Bestandsanlagen. Die Trocknungsluft wird in der Folge in der Trocknungsanlage 30 nicht so stark abgekühlt wie gemäß dem Stand der Technik beziehungsweise wie bei einem konventionellen Gegenstromwärmetauscher. Dadurch bleibt im Austritt der beispielhaft als Luft-Luft-Wärmetauscher ausgebildeten Trocknungsanlage 30 in der Abluftleitungsanordnung 5000 das Temperaturniveau erhalten und es können nachfolgend weitere Prozesse mit einer hohen Kalorik und Temperaturgefälle versorgt werden.

Sofern oben Temperaturen genannt sind, sind diese zwar bevorzugt, jedoch nicht hart limitierend. Beispielhaft können Abweichungen von einschließlich 20 Prozent, zumindest jedoch von einschließlich 10 Prozent umfasst sein. Mit besonderem Vorzug sind die Temperaturverhältnisse skalierbar, sofern das Trocknungssystem dies technisch ermöglicht. Sofern die Figurenbeschreibung Definitionen aufweist, können diese auch isoliert gelten und müssen nicht zwangsweise im Kontext mit der gesamten Figur 1 stehen.

Nachfolgendes Beispiel des Trocknungssystems 1 entspricht der Figur 1 und ist nicht limitierender Natur. Insbesondere können die Merkmale gemäß den Lehren der einzelnen Ansprüche aus der nachfolgenden Erläuterung ausgeschlossen oder miteinander kombiniert werden. Zum Trocknungssystem 1 gehörend sind insbesondere der Vorwärm-Wärmetauscher 10, der Luft-Luft-Wärmetauscher 20 und die Trocknungsanlage 30. Optional kann die Wärmetauschervorrichtung 50 mit den beschriebenen Merkmalen in das Trocknungssystem 1 eingebunden werden. Weiterhin optional kann der Luft-Wasser-Wärmetauscher 60 mit den beschriebenen Merkmalen in das Trocknungssystem 1 eingebunden werden. Weiterhin optional kann der Medien-Wärmetauscher 40 mit den beschriebenen Merkmalen in das Trocknungssystem 1 eingebunden werden. Es ist möglich, dass nur die Wärmetauschervorrichtung 50, nur der Luft-Wasser-Wärmetauscher 60 oder nur der Medien-Wärmetauscher 40 einbezogen wird. Es sind jedoch auch Permutationen von Wärmetauschervorrichtung 50, Luft-Wasser-Wärmetauscher 60 und Medien-Wärmetauscher 40 möglich.

Die Frischluft fließt über die Zuluftleitungsanordnung 1000 in den Vorwärm-Wärmetauscher 10, insbesondere in dessen Vorwärmvolumen 11, und verlässt den Vorwärm-Wärmetauscher 10 über die einspeisende LLW-Frischluftströmungsanordnung 2000. Ebenfalls strömt ein erstes Strömungswärmemedium S, insbesondere im Wesentlichen Wasser, und gegebenenfalls weitere Strömungswärmemedien X in den Vorwärm-Wärmetauscher 10, insbesondere in das Vorwärmdurchflussvolumen 12, und verlässt den Vorwärm-Wärmetauscher 10 anschließend. Die in das Vorwärmvolumen 11 strömende Frischluft hat mit ihrer Außentemperatur T_A eine geringere Temperatur als das erste oder weitere Strömungswärmemedien S, X mit der Vorwärmeinströmtemperatur T_V, sodass die Frischluft anschließend eine geregelte, also per Wärmeübergang gewünscht eingestellte, Frischlufteinströmtemperatur T_G aufweist.

Der Vorwärm-Wärmetauscher 10 ist mit dem Luft-Luft-Wärmetauscher 20 wirkverbunden. Der Luft-Luft-Wärmetauscher 20 weist ein LLW-Abluftvolumen 21 auf. Das LLW-Abluftvolumen 21 nimmt über eine einspeisende LLW-Abluftströmungsanordnung 100 Luft, bevorzugt mit Feuchtigkeit beladene Abluft K, besonders bevorzugt mit Feuchtigkeit beladene Abluft K aus dem Trocknungsprozess in der Trocknungsanlage 30, mit einer Initialtemperatur T_I auf und gibt diese Luft über die ausspeisende LLW-Abluftströmungsanordnung 200 mit der Abluft-Folgetemperatur T_AF ab. Der Luft-Luft-Wärmetauscher 20 weist zudem ein LLW-Frischluftvolumen 22 auf. Das LLW-Frischluftvolumen 22 nimmt die Frischluft aus der einspeisenden LLW-Frischluftströmungsanordnung 2000 mit der geregelten Frischlufteinströmtemperatur T_G auf und gibt diese Frischluft an die ausspeisende LLW-Frischluftströmungsanordnung 3000 mit der LLW-Austrittstemperatur T_AT ab.

Die vom Vorwärm-Wärmetauscher 10 über die einspeisende LLW-Frischluftströmungsanordnung 2000 in den Luft-Luft-Wärmetauscher 20, insbesondere in das LLW-Frischluftvolumen 22, strömende Frischluft, hat eine geringere Temperatur als es die Luft mit der Initialtemperatur T_I aus der einspeisenden LLW-Abluftströmungsanordnung 100 hat. Allerdings hat die über die einspeisende LLW-Frischluftströmungsanordnung 2000 in den Luft-Luft-Wärmetauscher 20, insbesondere in das LLW-Frischluftvolumen 22, strömende Frischluft mit ihrer geregelten Frischlufteinströmtemperatur T_G eine höhere Temperatur als es der Umgebungsluft entspricht. Dies führt dazu, dass die LLW-Austrittstemperatur T_AT eine höhere Temperatur hat, als wenn die Frischluft mit der Umgebungstemperatur in das LLW-Frischluftvolumen 22 geströmt wäre. Auch hat dies zur Folge, dass die Temperatur im LLW-Abluftvolumen 21 nicht wie bei konventionellen Trocknungssystemen abfällt, sodass die Luft in der ausspeisenden LLW-Abluftströmungsanordnung 200 mit der Abluft-Folgetemperatur T_AF, anders als bei konventionellen Trocknungsanlagen, für Folgeprozesse von hohem Interesse und nutzbar ist.

Wie weiter in Figur 1 dargestellt, und unabhängig von den weiteren Merkmalen dieser Figur, ist vorgesehen, dass die Frischluft mit der LLW-Austrittstemperatur T_AT über die ausspeisende LLW-Frischluftströmungsanordnung 3000 in den Medien-Wärmetauscher 40 strömt. In diesem Medien-Wärmetauscher 40 können diverse Wärmeübergangsprozesse erfolgen, sodass die Frischluft anschließend mit einer vordefinierten Prozesstemperatur T_P aus dem Medien-Wärmetauscher 40 und entlang der Durchströmanordnung 4000 in die Trocknungsanlage 30 strömt. Sofern kein Medien-Wärmetauscher 40 vorgesehen ist, kann die LLW-Austrittstemperatur T_AT gegebenenfalls auch direkt der vordefinierten Prozesstemperatur T_P entsprechen.

Aus der Durchströmanordnung 4000 kommend, oder falls kein Medien-Wärmetauscher 40 vorhanden ist, aus der ausspeisenden LLW-Frischluftströmungsanordnung 3000 kommend, strömt die Frischluft für den Trocknungsprozess des Trocknungsmediums in die Trocknungsanlage 30 und strömt aus dieser nach dem Trocknungsprozess des Trocknungsmediums in die Abluftleitungsanordnung 5000, wobei die Frischluft dann mit Feuchtigkeit beladene Abluft K ist. Die Feuchtigkeit aus der Abluft K entstammt dem getrockneten Trocknungsmedium.

Diese mit Feuchtigkeit beladene Abluft K kann unmittelbar, oder mittelbar, also beispielhaft nach weiteren Wärmeübergangsprozessen, über die einspeisende LLW-Abluftströmungsanordnung 100 mit der Temperatur, welche ab dem Prozessschritt als Initialtemperatur T_I bezeichnet wird, in den Luft-Luft-Wärmetauscher 20 eingespeist werden.

Die aus dem Luft-Luft-Wärmetauscher 20 entlang der ausspeisenden LLW-Abluftströmungsanordnung 200 strömende Luft kann über die Wärmetauschervorrichtung 50 zum Wärmeübertrag mit einem flüssigen Medium wechselwirkend entlang einer oder mehrerer Fluidleitungen zum Luft-Wasser-Wärmetauscher 60 strömen. Optional kann die aus dem Luft-Luft-Wärmetauscher 20 entlang der ausspeisenden LLW-Abluftströmungsanordnung 200 strömende Abluft auch direkt zum Luft-Wasser-Wärmetauscher 60 strömen.

Der Luft-Wasser-Wärmetauscher 60 weist insbesondere ein LWW-Übertragungsvolumen 61 und ein LWW-Aufwärmvolumen 62 auf. Im Luft-Wasser-Wärmetauscher 60 durchströmt die Abluft insbesondere ein LWW-Übertragungsvolumen 61 und tauscht dabei Wärme mit einem das LWW-Aufwärmvolumen 62 durchströmende erste Strömungswärmemedium S aus.

Das erste Strömungswärmemedium S und/oder weitere Strömungswärmemedien X können dann durch eine Strömungswärmeanordnung 400 aus dem LWW-Aufwärmvolumen 62 ausströmend in eine Wärmeeinspeiseanordnung 500 einströmen, welche wiederum zum Wärmeaustausch in das Vorwärmdurchflussvolumen 12 des Vorwärm-Wärmetauschers 10 einströmt. Diesem Kreislauf folgend wider Restwärme aus dem Vorwärm-Wärmetauschers 10 wieder zum Vorwärm-Wärmetauschers 10 zurückgeführt.

### Bezugszeichenliste

- 1: Trocknungssystem
- 10: Vorwärm-Wärmetauscher
- 11: Vorwärmvolumen
- 12: Vorwärmdurchflussvolumen
- 20: Luft-Luft-Wärmetauscher
- 21: LLW-Abluftvolumen
- 22: LLW-Frischluftvolumen
- 30: Trocknungsanlage
- 40: Medien-Wärmetauscher
- 50: Wärmetauschervorrichtung
- 60: Luft-Wasser-Wärmetauscher
- 61: LWW-Übertragungsvolumen
- 62: LWW-Aufwärmvolumen

- 100: einspeisende LLW-Abluftströmungsanordnung
- 200: ausspeisende LLW-Abluftströmungsanordnung
- 300: Fluidleitung(en)
- 400: Strömungswärmeanordnung
- 500: Wärmeeinspeiseanordnung

- 1000: Zuluftleitungsanordnung
- 2000: einspeisende LLW-Frischluftströmungsanordnung
- 3000: ausspeisende LLW-Frischluftströmungsanordnung
- 4000: Durchströmanordnung
- 5000: Abluftleitungsanordnung

- LLW: Luft-Luft-Wärmetauscher
- T_I: Initialtemperatur
- T_A: Außentemperatur
- T_G: Geregelte Frischlufteinströmtemperatur
- T_N: Niedertemperatur
- T_V: Vorwärmeinströmtemperatur
- T_AT: LLW-Austrittstemperatur
- T_AF: Abluft-Folgetemperatur
- T_N: Niedertemperatur
- T_P: Vordefinierte Prozesstemperatur

- S: Erstes Strömungswärmemedium, insbesondere im Wesentlichen Wasser
- X: Mehrere Strömungswärmemedium
- W: Flüssiges Medium, insbesondere im Wesentlichen Wasser
- K: mit Feuchtigkeit beladene Abluft

## Patentansprüche

1. Trocknungssystem zur Trocknung eines Trocknungsmediums, insbesondere zur Trocknung von Faserstoffen, das Trocknungssystem (1) aufweisend mindestens folgende Komponenten:
- einen Luft-Luft-Wärmetauscher (LLW) (20) mit einem LLW-Abluftvolumen (21) und einem LLW-Frischluftvolumen (22), der Luft-Luft-Wärmetauscher (20) aufweisend:
- eine einspeisende LLW-Abluftströmungsanordnung (100) zum Einströmen von Abluft (K) mit einer Initialtemperatur (T_I) in das LLW-Abluftvolumen (21) und
- eine ausspeisende LLW-Abluftströmungsanordnung (200) mit einer Abluft-Folgetemperatur (T_AF) zum Ausströmen von Abluft (K) aus dem LLW-Abluftvolumen (21),
- eine einspeisende LLW-Frischluftströmungsanordnung (2000) zum Einströmen von Frischluft mit einer geregelten Frischlufteinströmtemperatur (T_G) in das LLW-Frischluftvolumen (22) und
- eine ausspeisende LLW-Frischluftströmungsanordnung (3000) zum Ausströmen von Frischluft mit einer LLW-Austrittstemperatur (T_AT) aus dem LLW-Frischluftvolumen (22),
wobei das LLW-Abluftvolumen (21) und das LLW-Frischluftvolumen (22) derart ausgebildet sind, dass Wärme von dem LLW-Abluftvolumen (21) auf das LLW-Frischluftvolumen (22) übertragbar ist, um die Frischluft zu erwärmen;
- eine Trocknungsanlage (30), die zur Trocknung des Trocknungsmediums ausgestaltet ist, wobei die Trocknungsanlage (30) derart ausgebildet ist, dass die mindestens durch den Luft-Luft-Wärmetauscher (20) aufgewärmte und zumindest mittelbar aus der LLW-Frischluftströmungsanordnung (3000) ausgeströmte Frischluft als Trocknungsluft mit dem Trocknungsmedium interagiert und verdampfte Feuchtigkeit aus dem Trocknungsmedium aufnimmt und als mit Feuchtigkeit beladene Abluft (K) an eine Abluftleitungsanordnung (5000) ausgibt;
wobei das Trocknungssystem (1) ausgebildet ist, die Abluft (K) aus der Trocknungsanlage (30) über die Abluftleitungsanordnung (5000) und über die LLW-Abluftströmungsanordnung (100) zumindest mittelbar zum Luft-Luft-Wärmetauscher (20) zu führen, sodass eine zumindest mittelbare Übertragung der Wärme aus der Abluft (K) in der Abluftleitungsanordnung (5000) auf die Frischluft in dem Luft-Luft-Wärmetauscher (20) erfolgt;
wobei der Luft-Luft-Wärmetauscher (20) die Abluft (K) aus der einspeisenden LLW-Abluftströmungsanordnung (100) energetisch mindert;
wobei das Trocknungssystem (1) aufweist einen Vorwärm-Wärmetauscher (10) mit einem Vorwärmvolumen (11) und einem Vorwärmdurchflussvolumen (12), wobei der Vorwärm-Wärmetauscher (10) ausgebildet ist zur Erwärmung von Frischluft, insbesondere Umgebungsluft, von einer Außentemperatur (T_A) auf die geregelte Frischlufteinströmtemperatur (T_G);
wobei das Trocknungssystem (1) aufweist eine Zuluftleitungsanordnung (1000) zur Einspeisung der Frischluft mit der Außentemperatur (T_A) in den Vorwärm-Wärmetauscher (10),
wobei die einspeisende LLW-Frischluftströmungsanordnung (2000) den Vorwärm-Wärmetauscher (10) zumindest mittelbar mit dem Luft-Luft-Wärmetauscher (20) verbindet, um die Frischluft mit der geregelten Frischlufteinströmtemperatur (T_G), für den Luft-Luft-Wärmetauscher (20), insbesondere für das LLW-Frischluftvolumen (22) des Luft-Luft-Wärmetauschers (20), bereitzustellen.

2. Trocknungssystem nach Anspruch 1, wobei
das Trocknungssystem (1) zumindest einen Medien-Wärmetauscher (40) aufweist, der ausgebildet ist, um mit einem Medium beaufschlagt zu werden, um die Frischluft aus der ausspeisenden LLW-Frischluftströmungsanordnung (3000) auf eine vordefinierte Prozesstemperatur (T_P) einzustellen, die der Trocknungsanlage (30) über eine von dem Trocknungssystem (1) umfassten Durchströmanordnung (4000) zugeführt wird.

3. Trocknungssystem nach Anspruch 2, wobei
der Medien-Wärmetauscher (40) ausgebildet ist, um mit Frischdampf, Öl, Heißwasser, Salzlösung, Wasserstoff, Fernwärme, Strom, Gasverbrennung und/oder einer Mischung daraus beaufschlagt zu werden, um die Frischluft auf die vordefinierte Prozesstemperatur (T_P) einzustellen.

4. Trocknungssystem nach einem der Ansprüche 2 oder 3, wobei
der Medien-Wärmetauscher (40) einen oder mehrere Abwärmetauscher zwischen dem Luft-Luft-Wärmetauscher (20) und der Trocknungsanlage (30) aufweist, wobei der oder die Abwärmetauscher des Medien-Wärmetauschers (40) zumindest mittelbar Wärme aus einem autarken Dampf-Kondensat-System nutzt oder nutzen, das zur Trocknung des Trocknungsmediums in der Trocknungsanlage (30) ausgebildet ist, um die Frischluft der LLW-Frischluftströmungsanordnung (3000) auf die vordefinierte Prozesstemperatur (T_P) aufzuheizen und mittels der Durchströmanordnung (4000) in die Trocknungsanlage (30) weiterzuleiten.

5. Trocknungssystem nach mindestens einem der Ansprüche 1 bis 4, wobei
das Trocknungssystem (1) einen Luft-Wasser-Wärmetauscher (LWW) (60) mit einem LWW-Übertragungsvolumen (61) und einem LWW-Aufwärmvolumen (62) aufweist,
wobei der Luft-Wasser-Wärmetauscher (60) ausgebildet ist zur Erwärmung eines ersten flüssigen und/oder gasförmigen Strömungswärmemediums (S), insbesondere im Wesentlichen Wasser, im LWW-Aufwärmvolumen (62) aus Wärme vom LWW-Übertragungsvolumen (61) hin zum LWW-Aufwärmvolumen (62),
wobei das Trocknungssystem (1) weiterhin eine Strömungswärmeanordnung (400) aufweist, die ausgebildet ist zur Weiterleitung des ersten Strömungswärmemediums (S) aus dem LWW-Aufwärmvolumen (62), und
wobei insbesondere das Trocknungssystem (1) weiterhin eine Wärmeeinspeiseanordnung (500) aufweist, die ausgebildet ist zur Einspeisung des ersten und/oder mehrerer Strömungswärmemedien (S, X) in das Vorwärmdurchflussvolumen (12).

6. Trocknungssystem nach Anspruch 5, wobei
wobei das erste Strömungswärmemedium (S) zumindest mittelbar aus der Strömungswärmeanordnung (400) zur zumindest mittelbaren Regelung der Frischlufteinströmtemperatur (T_G) in die Wärmeeinspeiseanordnung (500) einströmt, und/oder wobei die Strömungswärmeanordnung (400) den Luft-Wasser-Wärmetauscher (60) zumindest mittelbar mit dem Vorwärm-Wärmetauscher (10) verbindet, um das aufgeheizte Strömungswärmemedium (S) zur zumindest mittelbaren Regelung der Frischlufteinströmtemperatur (T_G) von dem LWW-Aufwärmvolumen (62) des Luft-Wasser-Wärmetauschers (60) in den Vorwärm-Wärmetauscher (10) weiterzuleiten.

7. Trocknungssystem nach einem der Ansprüche 5 oder 6, wobei
der Luft-Wasser-Wärmetauscher (60) ein Niedertemperatur-Luft-Wasser-Wärmetauscher ist,
wobei das Strömungswärmemedium (S) ein Niedertemperaturwärmemedium mit einer Niedertemperatur (T_N) ist, und
wobei die Strömungswärmeanordnung (400) eine Niedertemperaturwärmeleitung ist, wobei die Niedertemperatur (T_N) des Strömungswärmemediums (S) ausgehend aus dem Luft-Wasser-Aufwärmvolumen (62) größer ist als die Außentemperatur (T_A) in der Zuluftleitungsanordnung (1000).

8. Trocknungssystem nach mindestens einem der vorgenannten Ansprüche, wobei
wobei das Trocknungssystem (1) eine/die Wärmeeinspeiseanordnung (500) aufweist, die ausgebildet ist zur Einspeisung eines ersten oder mehrerer Strömungswärmemedien (S, X) mit einer Vorwärmeinströmtemperatur (T_V) in das Vorwärmdurchflussvolumen (12),
wobei die Vorwärmeinströmtemperatur (T_V) kleiner ist als die Initialtemperatur (T_I).

9. Trocknungssystem nach mindestens einem der Ansprüche 1 bis 8, wobei
das Trocknungssystem (1) eine oder mehrere Wärmetauschervorrichtungen (50) zwischen dem Luft-Luft-Wärmetauscher (20) und dem Luft-Wasser-Wärmetauscher (60) aufweist, wobei die Wärmetauschervorrichtung/en (50) Wärme aus der Abluft (K) in der ausspeisenden LLW-Abluftströmungsanordnung (200) nutzt oder nutzen, um ein Medium (W), insbesondere im Wesentlichen Wasser, aufzuheizen.

10. Trocknungssystem nach mindestens einem der vorgenannten Ansprüche, wobei ein Gasmedium, insbesondere im Wesentlichen Verbrennungsgas, als Trägermedium zur Trocknung des Trocknungsmediums in der Trocknungsanlage (30) verwendet wird.

11. Trocknungssystem nach mindestens einem der vorgenannten Ansprüche, wobei ein bestehendes Trocknungssystem (1) zu einem Trocknungssystem (1) nach mindestens einem der Ansprüche 1 bis 10 nachgerüstet ist.

12. Trocknungssystem nach mindestens einem der vorgenannten Ansprüche, wobei das Trocknungssystem (1) derart ausgebildet ist, dass die Frischluft in der einspeisenden LLW-Frischluftströmungsanordnung (2000) mit der geregelten Frischlufteinströmtemperatur (T_G) die LLW-Austrittstemperatur (T_AT) in der ausspeisenden LLW-Frischluftströmungsanordnung (3000) zumindest mittelbar, insbesondere unmittelbar, thermisch beeinflusst, wobei insbesondere eine steigende Frischlufteinströmtemperatur (T_G) eine steigende Austrittstemperatur (T_AT) und eine steigende Abluft-Folgetemperatur (T_AF) herbeiführt und eine sinkende Frischlufteinströmtemperatur (T_G) eine sinkende LLW-Austrittstemperatur (T_AT) und eine sinkende Abluft-Folgetemperatur (T_AF) herbeiführt.

13. Trocknungsverfahren zur Trocknung eines Trocknungsmediums unter Verwendung eines Trocknungssystems (1) nach mindestens einem der Ansprüche 1 bis 12, das Trocknungsverfahren aufweisend mindestens folgenden Schritt:
Erwärmen der Frischluft in dem Vorwärm-Wärmetauscher (10), insbesondere in dem Vorwärmvolumen (11), von der Außentemperatur (T_A) auf die geregelte Frischlufteinströmtemperatur (T_G).

14. Trocknungsverfahren nach Anspruch 13,
wobei das Erwärmen der Frischluft in dem Vorwärm-Wärmetauscher (10), insbesondere in dem Vorwärmvolumen (11), erfolgt unter Einfluss des aus der Wärmeeinspeiseanordnung (500) nach mindestens einem der Ansprüche 5 bis 12 eingespeisten ersten und/oder mehrerer Strömungswärmemedien (S, X) in das Vorwärmdurchflussvolumen (12).

## Claims

1. Drying system for drying a drying medium, in particular for drying fiber materials, with the drying system (1) comprising at least the following components:
- an air-to-air heat exchanger (LLW) (20) with an exhaust air volume LLW (21) and a fresh air volume LLW (22), the air-to-air heat exchanger (20) comprising:
- a feed-in exhaust air flow configuration LLW (100) for the inflow of exhaust air (K) with an initial temperature (T_I) into the LLW exhaust air volume (21) and
- a feed-out exhaust air flow arrangement LLW (200) with a subsequent exhaust air temperature (T_AF) for discharging exhaust air (K) from the LLW exhaust air volume (21),
- a feed-in fresh air flow configuration LLW (2000) for the inflow of fresh air with a regulated fresh air inflow temperature (T_G) into the LLW fresh air volume (22) and
- a feed-out fresh air flow configuration LLW (3000) for discharging fresh air with an LLW outlet temperature (T_AT) from the LLW fresh air volume (22),
whereby the exhaust air volume LLW (21) and the fresh air volume LLW (22) are developed such that heat from the exhaust air volume LLW (21) is transferable to the fresh air volume LLW (22) in order to heat the fresh air;
- a drying plant (30) that is designed to dry the drying medium, whereby the drying plant (30) is developed such that the fresh air, which is at least heated by the air-to-air heat exchanger (20) and at least indirectly discharged from the fresh air flow configuration LLW (3000), interacts with the drying medium as drying air and absorbs evaporated moisture from the drying medium and discharges it to an exhaust air pipe configuration (5000) as moisture-laden exhaust air (K);
whereby the drying system (1) is developed to guide the exhaust air (K) from the drying plant (30) via the exhaust air pipe configuration (5000) and via the exhaust air flow configuration LLW (100) at least indirectly to the air-to-air heat exchanger (20), such that at least indirect transfer of the heat from the exhaust air (K) in the exhaust air pipe configuration (5000) to the fresh air in the air-to-air heat exchanger (20) occurs;
whereby the air-to-air heat exchanger (20) energetically reduces the exhaust air (K) from the feed-in exhaust air flow configuration LLW (100);
whereby the drying system (1) comprises a preheater heat exchanger (10) with a preheated volume (11) and a preheated flow volume (12), whereby the preheater heat exchanger (10) is developed to heat fresh air, in particular ambient air, from an outside temperature (T_A) to the regulated fresh air inflow temperature (T_G);
whereby the drying system (1) comprises a supply air pipe configuration (1000) for feeding in fresh air with the outside temperature (T_A) into the preheater heat exchanger (10),
whereby the feed-in fresh air flow configuration LLW (2000) at least indirectly connects the preheater heat exchanger (10) to the air-to-air heat exchanger (20) in order to supply the fresh air with the regulated fresh air inflow temperature (T_G) to the air-to-air heat exchanger (20), in particular to the fresh air volume LLW (22) of the air-to-air heat exchanger (20).

2. Drying system according to claim 1, whereby
the drying system (1) comprises at least one media heat exchanger (40) that is developed to be subjected to a medium in order to adjust the fresh air from the discharging fresh air flow configuration LLW (3000) to a predefined process temperature (T_P), which is supplied to the drying plant (30) via a throughflow configuration (4000) encircled by the drying system (1).

3. Drying system according to claim 2, whereby
the media heat exchanger (40) is developed to be subjected to live steam, oil, hot water, saline solution, hydrogen, district heat, electricity, gas combustion and/or a mixture thereof in order to adjust the fresh air to the predefined process temperature (T_P).

4. Drying system according to one of claims 2 or 3, whereby
the media heat exchanger (40) comprises one or more waste heat exchangers between the air-to-air heat exchanger (20) and the drying plant (30), whereby the waste heat exchanger(s) of the media heat exchanger (40) at least indirectly use(s) heat from a self-sufficient steam and condensate system that is developed for drying the drying medium in the drying plant (30) in order to heat the fresh air of the fresh air flow configuration LLW (3000) up to the predefined process temperature (T_P) and to transmit it to the drying plant (30) via the throughflow configuration (4000).

5. Drying system according to at least one of claims 1 to 4, whereby
the drying system (1) comprises an air-water heat exchanger (LWW) (60) with a transfer volume LWW (61) and a heating volume LWW (62), whereby the air-water heat exchanger (60) is developed to heat a first liquid and/or gaseous flow heat medium (S), in particular primarily water, in the heating volume LWW (62) from heat from the transfer volume LWW (61) all the way to the heating volume LWW (62),
whereby the drying system (1) continues to comprise a flow heat configuration (400) that is developed to transmit the first flow heat medium (S) from the heating volume LWW (62), and
whereby in particular the drying system (1) continues to comprise a heat supply configuration (500) that is developed for feeding in the first and/or several flow heat media (S, X) to the preheated flow volume (12).

6. Drying system according to claim 5, whereby
the first flow heat medium (S) at least indirectly flows into the heat supply configuration (500) from the flow heat configuration (400) for the at least indirect regulation of the fresh air inflow temperature (T_G), and/or whereby the flow heat configuration (400) at least indirectly connects the air-water heat exchanger (60) to the preheater heat exchanger in order to transmit the heated flow heat medium (S) into the preheater heat exchangers (10) for the at least indirect regulation of the fresh air inflow temperature (T_G) from the heating volume LWW (62) of the air-water heat exchanger (60) in the preheater heat exchanger (10).

7. Drying system according to one of claims 5 or 6, whereby
the air-water heat exchanger (60) is a low-temperature air-water heat exchanger,
whereby the flow heat medium (S) is a low-temperature heat medium with a low temperature (T_N), and
whereby the flow heat configuration (400) is a low-temperature heat conductor,
whereby the low temperature (T_N) of the flow heat medium (S) originating from the air-water heating volume (62) is greater than the outside temperature (T_A) in the supply air pipe configuration (1000).

8. Drying system according to at least one of the abovementioned claims, whereby
the drying system (1) comprises a/the heat supply configuration (500) that is developed for feeding in the first or several flow heat media (S, X) with a preheated inflow temperature (T_V) into the preheated flow volume (12),
whereby the preheated inflow temperature (T_V) is less than the initial temperature (T_I).

9. Drying system according to at least one of claims 1 to 8, whereby
the drying system (1) comprises one or several heat exchanger devices (50) between the air-to-air heat exchanger (20) and the air-water heat exchanger (60), whereby the heat exchanger device(s) (50) use(s) heat from the exhaust air (K) in the discharging exhaust air flow configuration LLW (200) in order to heat up a medium (W), in particular primarily water.

10. Drying system according to at least one of the abovementioned claims, whereby a gas medium, in particular primarily combustion gas, is used as a carrier medium for drying the drying medium in the drying plant (30).

11. Drying system according to at least one of the abovementioned claims, whereby an existing drying system (1) is retrofitted as a drying system (1) pursuant to at least one of claims 1 to 10.

12. Drying system according to at least one of the abovementioned claims, whereby the drying system (1) is developed such that the fresh air in the feed-in fresh air flow configuration LLW (2000) with the regulated fresh air inflow temperature (T_G) at least indirectly, in particular directly, thermally influences the outlet temperature LLW (T_AT) in the discharging fresh air flow configuration LLW (3000), whereby in particular a rising fresh air inflow temperature (T_G) induces a rising outlet temperature (T_AT) and a rising subsequent exhaust air temperature (T_AF) and a decreasing fresh air inflow temperature (T_G) induces a decreasing outlet temperature LLW (T_AT) and a decreasing subsequent exhaust air temperature (T_AF).

13. Drying procedure for drying a drying medium using a drying system (1) according to at least one of claims 1 to 12, with the drying procedure comprising at least the following step:
heating the fresh air in the preheater heat exchanger (10), in particular in the preheated volume (11), from the outside temperature (T_A) to the regulated fresh air inflow temperature (T_G).

14. Drying procedure according to claim 13,
whereby the heating of the fresh air in the preheater heat exchanger (10), in particular in the preheated volume (11), occurs under the influence of the first and/or several flow heat media (S, X) supplied from the heat supply configuration (500), according to at least one of claims 5 to 12, in the preheated flow volume (12).

## Revendications

1. Système de séchage destiné au séchage d'un milieu de séchage, en particulier pour le séchage de matières fibreuses, le système de séchage (1) comprenant au moins les composants suivants:
- un échangeur de chaleur air-air (LLW) (20) avec un volume d'air d'échappement LLW (21) et un volume d'air frais LLW (22), l'échangeur de chaleur air-air (20) comprenant:
- une configuration de flux d'air d'échappement LLW (100) entrant pour l'entrée d'air d'échappement (K) avec une température initiale (T_I) dans le volume d'air d'échappement LLW (21) et
- une configuration de flux d'air d'échappement LLW (200) sortant avec une température d'air d'échappement correspondante (T_AF) pour évacuer l'air d'échappement (K) du volume d'air d'échappement LLW (21),
- une configuration de flux d'air frais LLW (2000) entrant pour l'entrée d'air frais avec une température d'entrée d'air frais régulée (T_G) dans le volume d'air frais LLW (22) et
- une configuration de flux d'air frais LLW (3000) sortant pour évacuer l'air frais avec une température de sortie LLW (T_AT) à partir du volume d'air frais LLW (22),
dans lequel le volume d'air d'échappement LLW (21) et le volume d'air frais LLW (22) sont conçus de façon à ce que la chaleur du volume d'air d'échappement LLW (21) est transférable au volume d'air frais LLW (22) afin de chauffer l'air frais;
- une installation de séchage (30) conçue pour sécher le milieu de séchage, l'installation de séchage (30) étant conçue de telle sorte que l'air frais, qui est au moins chauffé par l'échangeur de chaleur air-air (20) et s'écoulant au moins indirectement à partir de la configuration de flux d'air frais LLW (3000), interagit avec le milieu de séchage en tant qu'air de séchage et absorbe l'humidité évaporée du milieu de séchage et l'évacue vers une configuration de tuyau d'échappement d'air (5000) sous forme d'air d'échappement chargé d'humidité (K);
dans lequel le système de séchage (1) étant conçu pour guider l'air d'échappement (K) de l'installation de séchage (30) via la configuration de tuyau d'échappement d'air (5000) et via la configuration de flux d'air d'échappement LLW (100) au moins indirectement vers l'échangeur de chaleur air-air (20), de telle sorte qu'un transfert de chaleur au moins indirect de l'air d'échappement (K) dans la configuration de tuyau d'échappement d'air (5000) vers l'air frais dans l'échangeur de chaleur air-air (20) se produit;
dans lequel l'échangeur de chaleur air-air (20) réduisant énergétiquement l'air d'échappement (K) de la configuration d'entrée de flux d'air d'échappement LLW (100);
dans lequel le système de séchage (1) comprenant un échangeur de chaleur à préchauffage (10) avec un volume de préchauffage (11) et un volume d'écoulement de préchauffage (12), l'échangeur de chaleur à préchauffage (10) étant conçu pour chauffer l'air frais, en particulier l'air ambiant, d'une température extérieure (T_A) à la température d'entrée d'air frais régulée (T_G);
dans lequel le système de séchage (1) comprenant une configuration de tuyau d'alimentation en air (1000) pour alimenter en air frais à température extérieure (T_A) l'échangeur de chaleur de préchauffage (10),
dans lequel la configuration de flux d'air frais LLW entrant (2000) relie au moins indirectement l'échangeur de chaleur à préchauffage (10) à l'échangeur de chaleur air-air (20) afin d'amener l'air frais avec la température d'entrée d'air frais régulée (T_G) à l'échangeur de chaleur air-air (20), en particulier pour le volume d'air frais LLW (22) de l'échangeur de chaleur air-air (20).

2. Système de séchage selon la revendication 1, dans lequel
le système de séchage (1) comprend au moins un échangeur de chaleur à fluide (40) qui est conçu pour être alimenté en fluide afin d'ajuster l'air frais provenant de la configuration de flux d'air frais LLW (3000) à une température de processus prédéfinie (T_P) qui est fournie à l'installation de séchage (30) via une configuration d'écoulement (4000) compris dans le système de séchage (1).

3. Système de séchage selon la revendication 2, dans lequel
l'échangeur de chaleur à fluide (40) est développé pour être soumis à de la vapeur vive, de l'huile, de l'eau chaude, une solution saline, de l'hydrogène, du chauffage urbain, de l'électricité, de la combustion de gaz et/ou un mélange de ceux-ci afin d'ajuster l'air frais à la température de processus prédéfinie (T_P).

4. Système de séchage selon l'une des revendications 2 ou 3, dans lequel
l'échangeur de chaleur à fluide (40) comprend un ou plusieurs échangeurs de chaleur résiduelle entre l'échangeur de chaleur air-air (20) et l'installation de séchage (30), le ou les échangeurs de chaleur résiduelle de l'échangeur de chaleur à fluide (40) utilisant au moins indirectement de la chaleur provenant d'un système de condensation de vapeur autosuffisant qui est conçu pour sécher le milieu de séchage dans l'installation de séchage (30) afin de chauffer l'air frais de la configuration de flux d'air frais LLW (3000) à la température de processus prédéfinie (T_P) et de le transmettre à l'installation de séchage (30) via la configuration d'écoulement (4000).

5. Système de séchage selon au moins l'une des revendications 1 ou 4, dans lequel
le système de séchage (1) comprend un échangeur de chaleur air-eau (LWW) (60) avec un volume de transfert LWW (61) et un volume de chauffage LWW (62), l'échangeur de chaleur air-eau (60) étant conçu pour chauffer un premier fluide caloporteur liquide et/ou gazeux (S), en particulier principalement de l'eau, dans le volume de chauffage LWW (62) à partir de la chaleur provenant du volume de transfert LWW (61) vers le volume de chauffage LWW (62),
dans lequel le système de séchage (1) comprendre en outre une configuration de circulation de chaleur (400) conçue pour transmettre le premier fluide caloporteur (S) depuis le volume de chauffage LWW (62), et
dans lequel le système de séchage (1) comprendre en outre une configuration d'alimentation en chaleur (500) qui est conçu pour alimenter le premier et/ou plusieurs fluides caloporteurs d'écoulement (S, X) dans le volume de flux de préchauffage (12).

6. Système de séchage selon la revendication 5, dans lequel
le premier fluide caloporteur (S) s'écoule au moins indirectement dans la configuration d'alimentation en chaleur (500) à partir de la configuration de circulation de chaleur (400) pour la régulation au moins indirecte de la température d'entrée d'air frais (T_G), et/ou la configuration de circulation de chaleur (400) relie au moins indirectement l'échangeur de chaleur air-eau (60) à l'échangeur de chaleur à préchauffage afin de transmettre le fluide caloporteur (S) chauffé dans les échangeurs de chaleur à préchauffage (10) pour la régulation au moins indirecte de la température d'entrée d'air frais (T_G) à partir du volume de chauffage LWW (62) de l'échangeur de chaleur air-eau (60) dans l'échangeur de chaleur à préchauffage (10).

7. Système de séchage selon l'une des revendications 5 ou 6, dans lequel
l'échangeur de chaleur air-eau (60) est un échangeur de chaleur air-eau à basse température,
dans lequel le fluide caloporteur d'écoulement (S) étant un fluide caloporteur à basse température avec une basse température (T_N), et
dans lequel la configuration de circulation de chaleur (400) étant un conducteur de chaleur à basse température,
dans lequel la basse température (T_N) du fluide caloporteur d'écoulement (S) en provenance du volume de chauffage air-eau (62) étant supérieure à la température extérieure (T_A) dans la configuration de tuyau d'alimentation en air (1000).

8. Système de séchage selon au moins l'une des revendications susmentionnées, dans lequel
le système de séchage (1) comprend une configuration d'alimentation en chaleur (500) conçue pour alimenter un ou plusieurs fluides caloporteurs (S, X) avec une température d'entrée de préchauffage (T_V) dans le volume de flux de préchauffage (12),
dans lequel la température d'entrée de préchauffage (T_V) étant inférieure à la température initiale (T_I).

9. Système de séchage selon au moins l'une des revendications 1 ou 8, dans lequel
le système de séchage (1) comprend un ou plusieurs dispositifs d'échangeur de chaleur (50) entre l'échangeur de chaleur air-air (20) et l'échangeur de chaleur air-eau (60), dans lequel le ou les dispositifs d'échangeur de chaleur (50) utilisant la chaleur de l'air d'échappement (K) dans la configuration de flux d'air d'échappement LLW (200) afin de chauffer un milieu (W), en particulier principalement de l'eau.

10. Système de séchage selon au moins l'une des revendications précédentes, dans lequel un milieu gazeux, en particulier principalement un gaz de combustion, est utilisé comme milieu porteur pour sécher le milieu de séchage dans l'installation de séchage (30).

11. Système de séchage selon au moins l'une des revendications précédentes, dans lequel un système de séchage existant (1) est transformé en système de séchage (1) selon au moins l'une des revendications 1 à 10.

12. Système de séchage selon au moins l'une des revendications précédentes, dans lequel le système de séchage (1) est conçu de telle sorte que l'air frais dans la configuration de flux d'air frais d'alimentation LLW (2000) avec la température d'entrée d'air frais régulée (T_G) influence au moins indirectement, en particulier directement, thermiquement la température de sortie LLW (T_AT) dans la configuration de flux d'air frais d'alimentation LLW (3000), dans lequel en particulier une température d'entrée d'air frais (T_G) croissante entraîne une température de sortie (T_AT) croissante et une température de reprise d'air évacué (T_AF) croissante et une température d'entrée d'air frais (T_G) décroissante entraîne une température de sortie LLW (T_AT) décroissante et une température de reprise d'air évacué (T_AF) décroissante.

13. Procédé de séchage d'un milieu de séchage à l'aide d'un système de séchage (1) selon au moins l'une des revendications 1 à 12, le procédé de séchage comprenant au moins l'étape suivante:
le chauffage de l'air frais dans l'échangeur de chaleur à préchauffage (10), en particulier dans le volume de préchauffage (11), de la température extérieure (T_A) à la température d'entrée d'air frais régulée (T_G).

14. Procédé de séchage selon la revendication 13,
dans lequel le chauffage de l'air frais dans l'échangeur de chaleur à préchauffage (10), en particulier dans le volume de préchauffage (11), se produit sous l'influence du premier et/ou de plusieurs fluides caloporteurs d'écoulement (S, X) amenés à partir de la configuration d'alimentation en chaleur (500) selon au moins l'une des revendications 5 à 12, dans le volume d'écoulement de préchauffage (12).
